# EUROPEAN PATENT APPLICATION

(11) **EP 4 567 292 A1**
(43) Date of publication of application: **11.06.2025**
(21) Application number: 23916258.9
(22) Date of filing: 21.12.2023
(51) Int. Cl.: F16D 43/10, F16D 13/52

(54) **POWER TRANSMISSION DEVICE**

(30) Priority: 11.01.2023 JP 2023002564
(71) Applicant: Kabushiki Kaisha F.C.C., Hamamatsu-shi, Shizuoka 431-1394 (JP)
(72) Inventor: KONDO Hiroyuki, Hamamatsu-shi, Shizuoka 431-1394 (JP); OZAWA Yoshihiko, Hamamatsu-shi, Shizuoka 431-1394 (JP); CHEN Han Hiong, Hamamatsu-shi, Shizuoka 431-1394 (JP); SHIMIZU Ryota, Hamamatsu-shi, Shizuoka 431-1394 (JP)
(74) Representative: Grünecker Patent- und Rechtsanwälte PartG mbB
(86) International application number: PCT/JP2023/046015
(87) International publication number: WO 2024/150644

(57) **Abstract**

A power transmission apparatus K includes a centrifugal clutch means 9 including: a weight member 10 movable from a radially inner position to a radially outer position with centrifugal force produced by rotation of a clutch housing 2; and a pressing member 12 that moves in a direction in which driving and driven clutch plates 6 and 7 are to be pressed against each other upon movement of the weight member 10 from the radially inner position to the radially outer position. The weight member 10 is configured to press the driving and driven clutch plates 6 and 7 against each other through the pressing member 12 in course of movement of the weight member 10 from the radially inner position to the radially outer position. The centrifugal clutch means 9 includes, on its portions where the weight member 10 and the pressing member 12 come into contact with each other, first inclined surfaces 10a and 12a and second inclined surfaces 10b and 12b whose inclination angles relative to an axial direction of an output shaft 3 are greater than those of the first inclined surfaces 10a and 12a.

## Description

### TECHNICAL FIELD

The present invention relates to power transmission apparatuses each of which is able to freely transmit a rotational force of an input member to an output member or cut off the rotational force.

### BACKGROUND ART

As disclosed, for example, in Patent Literature 1, a power transmission apparatus known in the art includes a centrifugal clutch means including a weight member that moves from a radially inner position to a radially outer position with centrifugal force produced by rotation of a clutch housing and is thus able to press driving and driven clutch plates against each other through a pressing member. The power transmission apparatus known in the art is able to apply centrifugal force to the weight member in accordance with rotation of the clutch housing caused by actuation of a driving source, such as an engine, and is thus able to press the driving and driven clutch plates against each other through the pressing member so as to transmit a driving force of the engine to a wheel.

### CITATION LIST

### PATENT LITERATURE

[Patent Literature 1] WO 2013/183588

### SUMMARY OF INVENTION

### TECHNICAL PROBLEM

Using the power transmission apparatus known in the art for, for example, a small-size vehicle whose engine has a low displacement and whose clutch housing is low in rotational speed (i.e., whose primary ratio is high), however, makes it relatively difficult to set great centrifugal force for the weight member. This results in the need to increase an inclination angle of a cam surface that converts, for example, a thrust produced by the weight member into a pressing force for the driving and driven clutch plates. Unfortunately, setting a large inclination angle for the cam surface reduces a distance moved by the pressing member in an axial direction of an output member. In other words, setting a large inclination angle for the cam surface reduces distances moved by the driving and driven clutch plates in a direction in which they are pressed against each other (i.e., the axial direction of the output member). This may make it difficult to press the driving and driven clutch plates against each other so as to sufficiently transmit the driving force.

The present invention has been made in view of these points, and its object is to provide power transmission apparatuses each including a centrifugal clutch means that enables a pressing member to move a required distance in an axial direction of an output member and enables a weight member to produce a required thrust in order to press driving and driven clutch plates against each other so as to sufficiently transmit a driving force.

### SOLUTION TO PROBLEM

A power transmission apparatus according to the present invention includes: a clutch member to be rotated together with an input member that rotates with a driving force of a driving source, the clutch member being housed in a clutch housing holding driving clutch plates, the clutch member being connected to an output member that is able to rotate a wheel; a pressure member provided so as to be movable toward or away from the clutch member, the pressure member being able to push the driving clutch plates and driven clutch plates arranged alternately with the driving clutch plates; and a centrifugal clutch means including a weight member and a pressing member, the weight member being movable from a radially inner position to a radially outer position with centrifugal force produced by rotation of the clutch housing, the pressing member being provided such that the pressing member is able to come into contact with the weight member, the pressing member being configured to move in a direction in which the driving and driven clutch plates are to be pressed against each other upon movement of the weight member from the radially inner position to the radially outer position, the centrifugal clutch means being configured to, when the weight member is located at the radially outer position, press the driving and driven clutch plates against each other so as to enable transmission of the driving force of the driving source to the wheel and configured to, when the weight member is located at the radially inner position, release a pressing force exerted on the driving and driven clutch plates so as to be able to cut off transmission of the driving force of the driving source to the wheel. The weight member is configured to press the driving and driven clutch plates against each other through the pressing member in course of movement of the weight member from the radially inner position to the radially outer position. The centrifugal clutch means includes, on a portion of at least one of the weight member and the pressing member that comes into contact with the other one of the weight member and the pressing member, a first inclined surface and a second inclined surface whose inclination angle relative to an axial direction of the output member is greater than that of the first inclined surface.

In the power transmission apparatus according to the present invention, the centrifugal clutch means includes, on the portion of at least one of the weight member and the pressing member that comes into contact with the other one of the weight member and the pressing member, the first inclined surface and the second inclined surface whose inclination angle relative to the axial direction of the output member is greater than that of the first inclined surface. The above-described embodiment is able to, in accordance with a driving status, allow the pressing member to move a required distance in the axial direction of the output member and allow the weight member to produce a required thrust.

Another power transmission apparatus according to the present invention includes: a clutch member to be rotated together with an input member that rotates with a driving force of a driving source, the clutch member being housed in a clutch housing holding driving clutch plates, the clutch member being connected to an output member that is able to rotate a wheel; a pressure member provided so as to be movable toward or away from the clutch member, the pressure member being able to push the driving clutch plates and driven clutch plates arranged alternately with the driving clutch plates; and a centrifugal clutch means including a weight member and a pressing member, the weight member being movable from a radially inner position to a radially outer position with centrifugal force produced by rotation of the clutch housing, the pressing member being provided such that the pressing member is able to come into contact with the weight member, the pressing member being configured to move in a direction in which the driving and driven clutch plates are to be pressed against each other upon movement of the weight member from the radially inner position to the radially outer position, the centrifugal clutch means being configured to, when the weight member is located at the radially outer position, press the driving and driven clutch plates against each other so as to enable transmission of the driving force of the driving source to the wheel and configured to, when the weight member is located at the radially inner position, release a pressing force exerted on the driving and driven clutch plates so as to be able to cut off transmission of the driving force of the driving source to the wheel. The weight member is configured to press the driving and driven clutch plates against each other through the pressing member in course of movement of the weight member from the radially inner position to the radially outer position. The centrifugal clutch means includes, on a portion of at least one of the weight member and the pressing member that comes into contact with the other one of the weight member and the pressing member, a first region and a second region that causes the pressing member to move in an axial direction of the output member by a shorter distance than the first region.

In said another power transmission apparatus according to the present invention, the centrifugal clutch means includes, on the portion of at least one of the weight member and the pressing member that comes into contact with the other one of the weight member and the pressing member, the first region and the second region that causes the pressing member to move in the axial direction of the output member by a shorter distance than the first region. The above-described embodiment is able to, in accordance with a driving status, allow the pressing member to move a required distance in the axial direction of the output member and allow the weight member to produce a required thrust.

Still another power transmission apparatus according to the present invention includes: a clutch member to be rotated together with an input member that rotates with a driving force of a driving source, the clutch member being housed in a clutch housing holding driving clutch plates, the clutch member being connected to an output member that is able to rotate a wheel; a pressure member provided so as to be movable toward or away from the clutch member, the pressure member being able to push the driving clutch plates and driven clutch plates arranged alternately with the driving clutch plates; and a centrifugal clutch means including a weight member and a pressing member, the weight member being movable from a radially inner position to a radially outer position with centrifugal force produced by rotation of the clutch housing, the pressing member being provided such that the pressing member is able to come into contact with the weight member, the pressing member being configured to move in a direction in which the driving and driven clutch plates are to be pressed against each other upon movement of the weight member from the radially inner position to the radially outer position, the centrifugal clutch means being configured to, when the weight member is located at the radially outer position, press the driving and driven clutch plates against each other so as to enable transmission of the driving force of the driving source to the wheel and configured to, when the weight member is located at the radially inner position, release a pressing force exerted on the driving and driven clutch plates so as to be able to cut off transmission of the driving force of the driving source to the wheel. The weight member is configured to press the driving and driven clutch plates against each other through the pressing member in course of movement of the weight member from the radially inner position to the radially outer position. The centrifugal clutch means includes, on a portion of at least one of the weight member and the pressing member that comes into contact with the other one of the weight member and the pressing member, a first region and a second region that causes the weight member to produce a greater thrust than the first region.

In said still another power transmission apparatus according to the present invention, the centrifugal clutch means includes, on the portion of at least one of the weight member and the pressing member that comes into contact with the other one of the weight member and the pressing member, the first region and the second region that causes the weight member to produce a greater thrust than the first region. The above-described embodiment is able to, in accordance with a driving status, allow the pressing member to move a required distance in the axial direction of the output member and allow the weight member to produce a required thrust.

### EFFECTS OF INVENTION

The present invention is able to provide power transmission apparatuses each including a centrifugal clutch means that enables a pressing member to move a required distance in an axial direction of an output member and enables a weight member to produce a required thrust in order to press driving and driven clutch plates against each other so as to sufficiently transmit a driving force.

### BRIEF DESCRIPTION OF DRAWINGS

[FIG. 1] FIG. 1 is an external view of a power transmission apparatus according to a first embodiment.
[FIG. 2] FIG. 2 is a cross-sectional view taken along the line II-II in FIG. 1.
[FIG. 3] FIG. 3 is a cross-sectional view taken along the line III-III in FIG. 1.
[FIG. 4] FIG. 4 is an exploded perspective view of the power transmission apparatus according to the first embodiment.
[FIG. 5] FIG. 5 is an exploded perspective view of the power transmission apparatus according to the first embodiment.
[FIG. 6] FIG. 6 is an exploded perspective view of a centrifugal clutch means according to the first embodiment.
[FIG. 7] FIG. 7 is a perspective view of a weight member according to the first embodiment.
[FIG. 8] FIG. 8 provides a plan view and a rear view of the weight member according to the first embodiment.
[FIG. 9] FIG. 9 is a cross-sectional view taken along the line IX-IX in FIG. 8.
[FIG. 10] FIG. 10 is a perspective view of a pressing member according to the first embodiment.
[FIG. 11] FIG. 11 provides a plan view and a side view of the pressing member according to the first embodiment.
[FIG. 12] FIG. 12 is a cross-sectional view taken along the line XII-XII in FIG. 11.
[FIG. 13] FIG. 13 is a perspective view of a holding member according to the first embodiment.
[FIG. 14] FIG. 14 is a cross-sectional view illustrating actions of the centrifugal clutch means according to the first embodiment (with each weight member located at a radially inner position).
[FIG. 15] FIG. 15 is a cross-sectional view illustrating actions of the centrifugal clutch means according to the first embodiment (with each weight member located between the radially inner position and a radially outer position).
[FIG. 16] FIG. 16 is a cross-sectional view illustrating actions of the centrifugal clutch means according to the first embodiment (with each weight member located at the radially outer position).
[FIG. 17] FIG. 17 is a schematic diagram illustrating a vehicle in which the power transmission apparatus according to the first embodiment is used.
[FIG. 18] FIG. 18 is a perspective view of a weight member according to a second embodiment.
[FIG. 19] FIG. 19 provides a plan view and a rear view of the weight member according to the second embodiment.
[FIG. 20] FIG. 20 is a cross-sectional view taken along the line XX-XX in FIG. 19.
[FIG. 21] FIG. 21 is a cross-sectional view illustrating actions of a centrifugal clutch means according to the second embodiment (with each weight member located at a radially inner position).
[FIG. 22] FIG. 22 is a cross-sectional view illustrating actions of the centrifugal clutch means according to the second embodiment (with each weight member located between the radially inner position and a radially outer position).
[FIG. 23] FIG. 23 is a cross-sectional view illustrating actions of the centrifugal clutch means according to the second embodiment (with each weight member located at the radially outer position).
[FIG. 24] FIG. 24 is a perspective view of a weight member according to a third embodiment.
[FIG. 25] FIG. 25 provides a plan view and a rear view of the weight member according to the third embodiment.
[FIG. 26] FIG. 26 is a cross-sectional view taken along the line XXVI-XXVI in FIG. 25.
[FIG. 27] FIG. 27 is a cross-sectional view illustrating actions of a centrifugal clutch means according to the third embodiment (with each weight member located at a radially inner position).
[FIG. 28] FIG. 28 is a cross-sectional view illustrating actions of the centrifugal clutch means according to the third embodiment (with each weight member located between the radially inner position and a radially outer position).
[FIG. 29] FIG. 29 is a cross-sectional view illustrating actions of the centrifugal clutch means according to the third embodiment (with each weight member located at the radially outer position).
[FIG. 30] FIG. 30 is a cross-sectional view illustrating actions of a centrifugal clutch means according to a fourth embodiment (with each weight member located at a radially inner position).
[FIG. 31] FIG. 31 is a cross-sectional view illustrating actions of the centrifugal clutch means according to the fourth embodiment (with each weight member located between the radially inner position and a radially outer position).
[FIG. 32] FIG. 32 is a cross-sectional view illustrating actions of the centrifugal clutch means according to the fourth embodiment (with each weight member located at the radially outer position).
[FIG. 33] FIG. 33 is a cross-sectional view illustrating actions of a centrifugal clutch means according to a fifth embodiment (with each weight member located at a radially inner position).
[FIG. 34] FIG. 34 is a cross-sectional view illustrating actions of the centrifugal clutch means according to the fifth embodiment (with each weight member located between the radially inner position and a radially outer position).
[FIG. 35] FIG. 35 is a cross-sectional view illustrating actions of the centrifugal clutch means according to the fifth embodiment (with each weight member located at the radially outer position).
[FIG. 36] FIG. 36 is a cross-sectional view illustrating actions of a centrifugal clutch means according to a sixth embodiment (with each weight member located at a radially inner position).
[FIG. 37] FIG. 37 is a cross-sectional view illustrating actions of the centrifugal clutch means according to the sixth embodiment (with each weight member located between the radially inner position and a radial position).
[FIG. 38] FIG. 38 is a cross-sectional view illustrating actions of the centrifugal clutch means according to the sixth embodiment (with each weight member located at the radially outer position).
[FIG. 39] FIG. 39 is a graph illustrating relationships between engine rotational speeds and distances moved by a pressing member.
[FIG. 40] FIG. 40 is a graph illustrating relationships between engine rotational speeds and thrusts produced by weight members.

### DESCRIPTION OF EMBODIMENTS

### First Embodiment

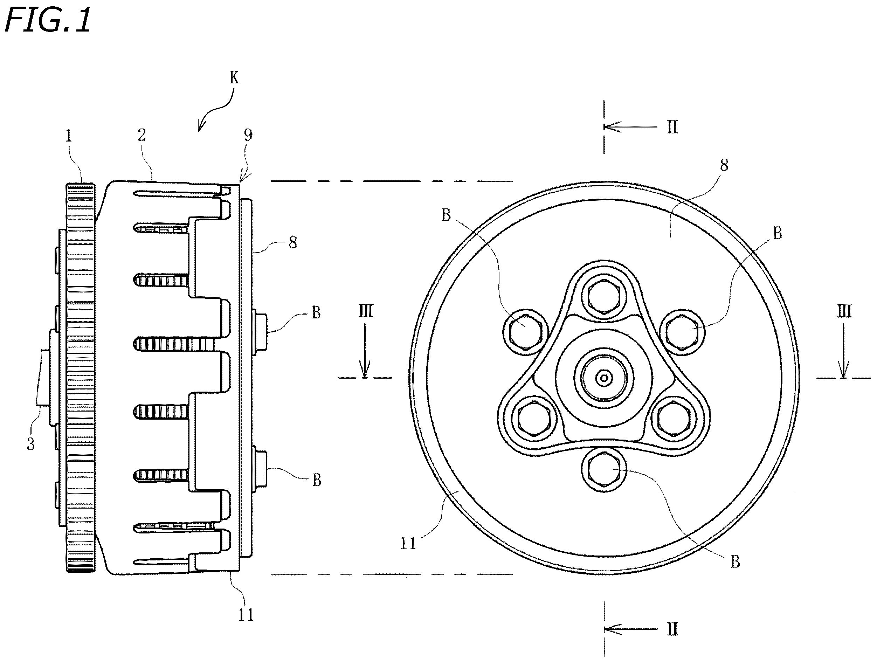

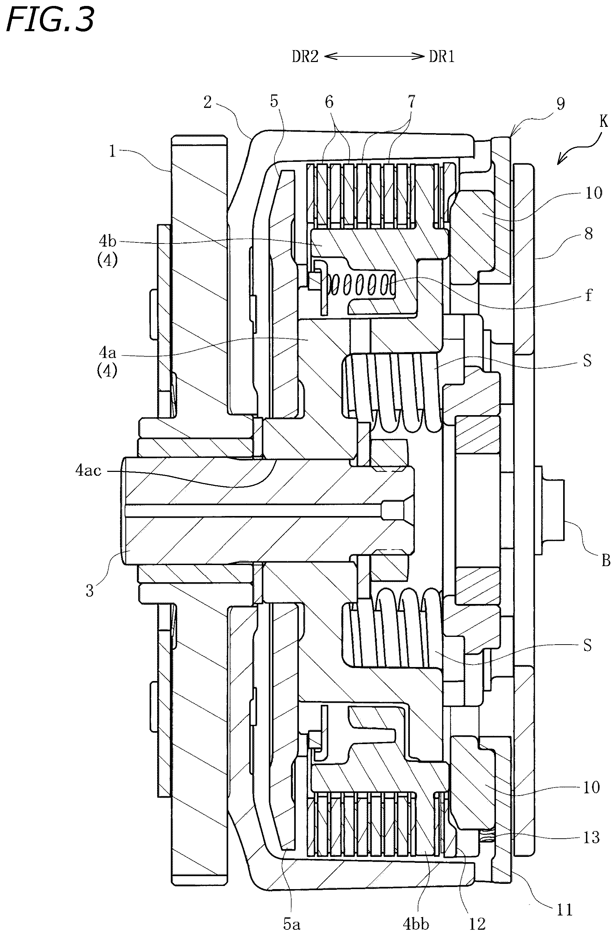

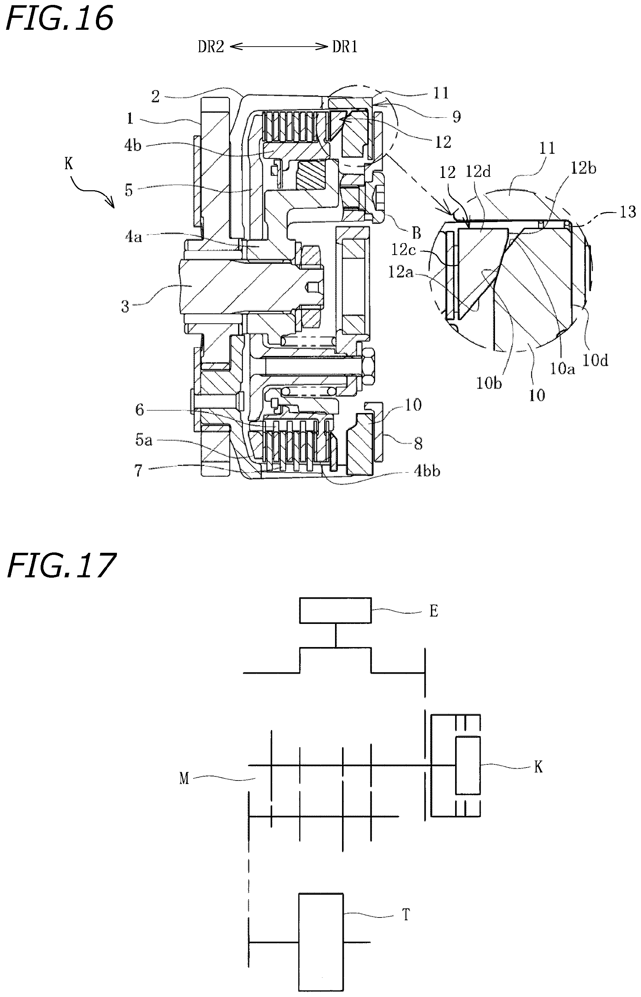

Embodiments of the present invention will be described below in detail with reference to the drawings. As illustrated in FIG. 17, a power transmission apparatus K is disposed in a vehicle so as to freely transmit a driving force of an engine E to a driving wheel T through a transmission M or cut off the driving force. The engine E is an example of a driving source. The driving wheel T is an example of a wheel. As illustrated in FIGS. 1 to 16, the power transmission apparatus K includes: a clutch housing 2 provided with an input gear 1 to be rotated with the driving force of the engine E on the vehicle; an output shaft 3 connected to the transmission M; a clutch member 4; a pressure member 5; driving clutch plates 6; driven clutch plates 7; and a centrifugal clutch means 9 including weight members 10. In the drawings, the reference sign 8 denotes a securing member, the reference sign S denotes a clutch spring, the reference sign f denotes a return spring, and the reference sign B denotes a bolt. The input gear 1 is an example of an input member. The output shaft 3 is an example of an output member.

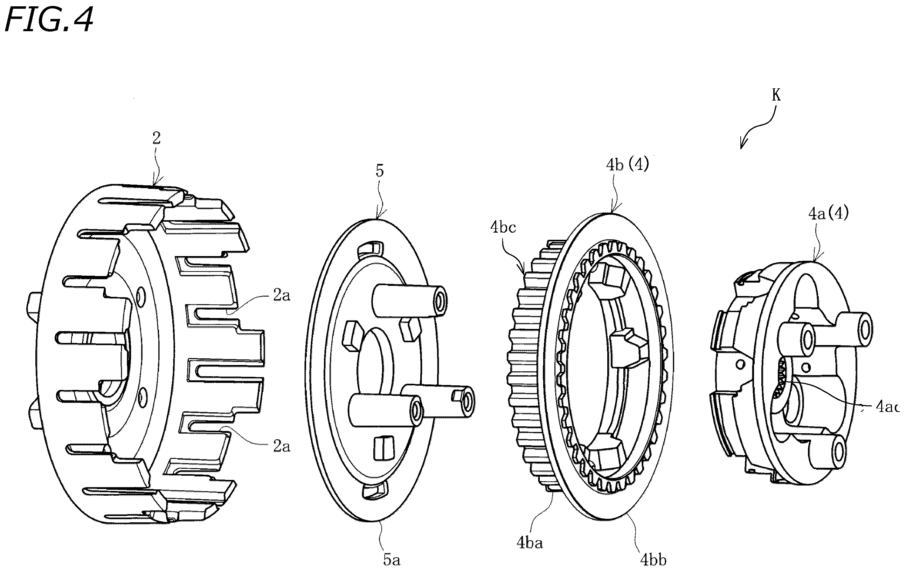

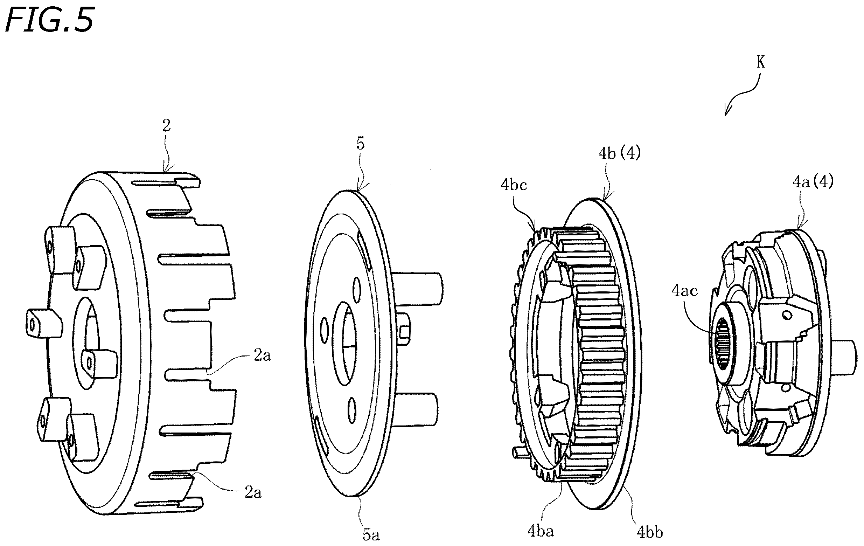

The input gear 1 is configured to be rotatable around the output shaft 3 upon receiving a driving force (or a rotational force) transmitted from the engine E. The input gear 1 is connected to the clutch housing 2 with a fastener, such as a rivet. As illustrated in FIGS. 4 and 5, the clutch housing 2 has a cylindrical shape with an opening defined at its one end. The driving force of the engine E causes the clutch housing 2 to rotate together with the input gear 1.

As illustrated in FIGS. 4 and 5, the clutch housing 2 is circumferentially provided with cut-outs 2a. The driving clutch plates 6 are fitted to the cut-outs 2A and thus attached to the clutch housing 2. In other words, the clutch housing 2 holds the driving clutch plates 6. The driving clutch plates 6 are each made of a substantially annular plate material. The driving clutch plates 6 are configured to be movable in an axial direction of the clutch housing 2 (which corresponds to an axial direction of the output shaft 3) and rotatable together with the clutch housing 2.

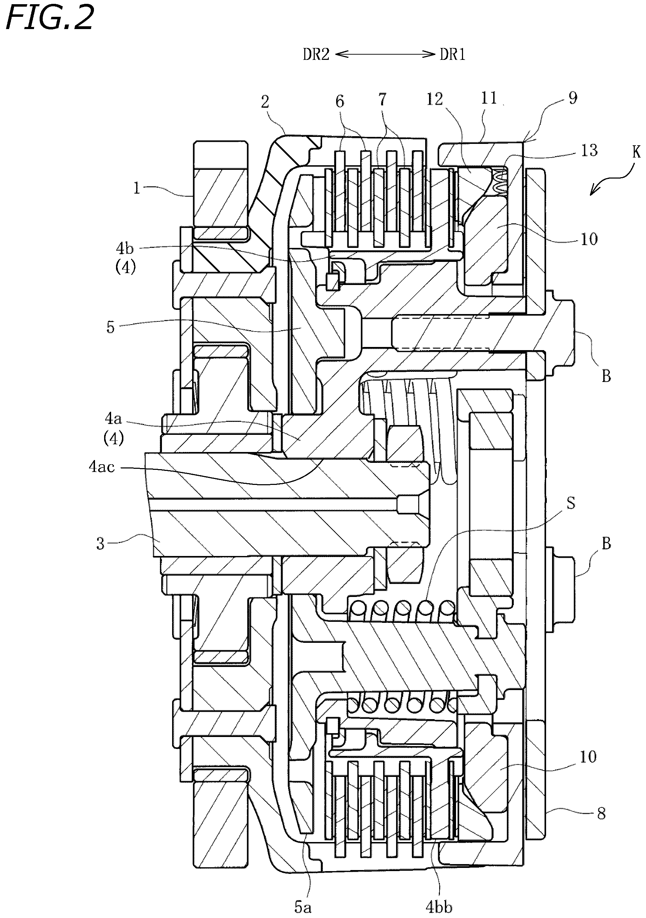

As illustrated in FIG. 2, the clutch member 4 is housed in the clutch housing 2. The clutch member 4 holds the driven clutch plates 7 arranged alternately with the driving clutch plates 6. The clutch member 4 is connected to the output shaft 3 that is able to rotate the driving wheel T through the transmission M of the vehicle. As illustrated in FIGS. 4 and 5, the clutch member 4 includes a first clutch member 4a and a second clutch member 4b. The first clutch member 4a is fitted to the second clutch member 4b.

As illustrated in FIGS. 4 and 5, the first clutch member 4a includes an insertion hole 4ac in its center. The output shaft 3 is inserted through the insertion hole 4ac such that splines provided in the insertion hole 4ac and splines provided on the output shaft 3 are in mesh with each other and thus connected to each other in a rotational direction. In other words, the first clutch member 4a is connected to the output shaft 3. The second clutch member 4b includes: an outer peripheral wall 4bc having an annular shape; and a flange 4bb extending radially outward from the outer peripheral wall 4bc. The outer peripheral wall 4bc is provided with a spline-fitting portion 4ba. The spline-fitting portion 4ba includes recesses and protrusions formed along substantially the entire circumference of the outer peripheral wall 4bc and integral with each other. The driven clutch plates 7 are attached to recessed grooves of the spline-fitting portion 4ba through spline-fitting. In other words, the second clutch member 4b holds the driven clutch plates 7. The driven clutch plates 7 are configured to be movable in an axial direction of the clutch member 4 (e.g., the second clutch member 4b), which corresponds to the axial direction of the output shaft 3, and rotatable together with the clutch member 4 (e.g., the first clutch member 4a and the second clutch member 4b). The second clutch member 4b is configured to be movable in the axial direction of the output shaft 3.

As illustrated in FIG. 4, the pressure member 5 is a disk member provided on its peripheral edge with a flange 5a. The pressure member 5 is assembled to the clutch member 4. The pressure member 5 is provided so as to be movable toward or away from the clutch member 4. The pressure member 5 is configured to be able to press the driving and driven clutch plates 6 and 7 against each other. The pressure member 5 is configured to be able to press the driving and driven clutch plates 6 and 7 against each other together with the clutch member 4. The pressure member 5 presses the driving and driven clutch plates 6 and 7 against each other so as to enable transmission of the driving force of the engine E to the driving wheel W. Specifically, the driving and driven clutch plates 6 and 7 are disposed in a stacked arrangement between the flange 5a of the pressure member 5 and the flange 4bb of the second clutch member 4b. Upon movement of the second clutch member 4b in a direction toward the pressure member 5 (i.e., a direction indicated by an arrow DR2 in FIG. 2), the driving and driven clutch plates 6 and 7 are pressed against each other such that a rotational force of the clutch housing 2 is transmitted to the output shaft 3 through the second clutch member 4b and the first clutch member 4a. Upon movement of the second clutch member 4b in a direction away from the pressure member 5 (i.e., a direction indicated by an arrow DR1 in FIG. 2), a pressing force exerted on the driving and driven clutch plates 6 and 7 is released so as to cause the first clutch member 4a and the second clutch member 4b to stop following rotation of the clutch housing 2 such that the rotational force of the clutch housing 2 is not transmitted to the output shaft 3. The driving and driven clutch plates 6 and 7 are provided so as to be movable in the axial direction of the output shaft 3 relative to the second clutch member 4b.

Thus, with the driving and driven clutch plates 6 and 7 pressed against each other, a rotational force input to the clutch housing 2 (i.e., the driving force of the engine E) is transmitted to the driving wheel T (or to the transmission M) through the output shaft 3. With the driving and driven clutch plates 6 and 7 released from being pressed against each other, the rotational force input to the clutch housing 2 is not transmitted to the output shaft 3.

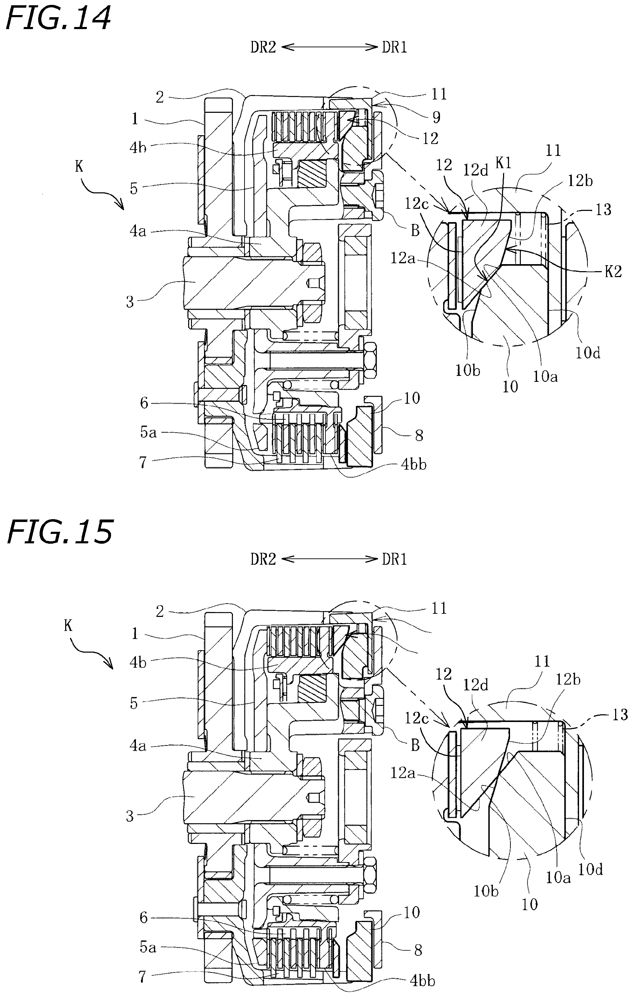

As illustrated in FIG. 2, the centrifugal clutch means 9 includes the weight members 10 each movable from a radially inner position (see FIG. 14) to a radially outer position (see FIG. 16) with centrifugal force produced by rotation of the clutch housing 2. The centrifugal clutch means 9 is disposed adjacent to the opening of the clutch housing 2 (i.e., in the right portion of FIG. 2). The centrifugal clutch means 9 is disposed opposite to the pressure member 5, with the driving and driven clutch plates 6 and 7 located therebetween. In this embodiment, the centrifugal clutch means 9 is disposed in the direction indicated by the arrow DR1 in FIG. 2 relative to the pressure member 5. When the weight members 10 are each located at the radially outer position, the centrifugal clutch means 9 presses the driving and driven clutch plates 6 and 7 against each other such that the driving force of the engine E is transmittable to the driving wheel T. The centrifugal clutch means 9 is configured to apply a pressing force to the driving and driven clutch plates 6 and 7 in the course of movement of each weight member 10 from the radially inner position to the radially outer position. The centrifugal clutch means 9 is configured to, when the weight members 10 are each located at the radially inner position, release the pressing force exerted on the driving and driven clutch plates 6 and 7 so as to be able to cut off transmission of the driving force of the engine E to the driving wheel T. In other words, the centrifugal clutch means 9 is configured to, when the weight members 10 are each located at the radially inner position, release the pressing force applied to the driving and driven clutch plates 6 and 7 so as to be able to cut off transmission of the driving force of the engine E to the driving wheel T.

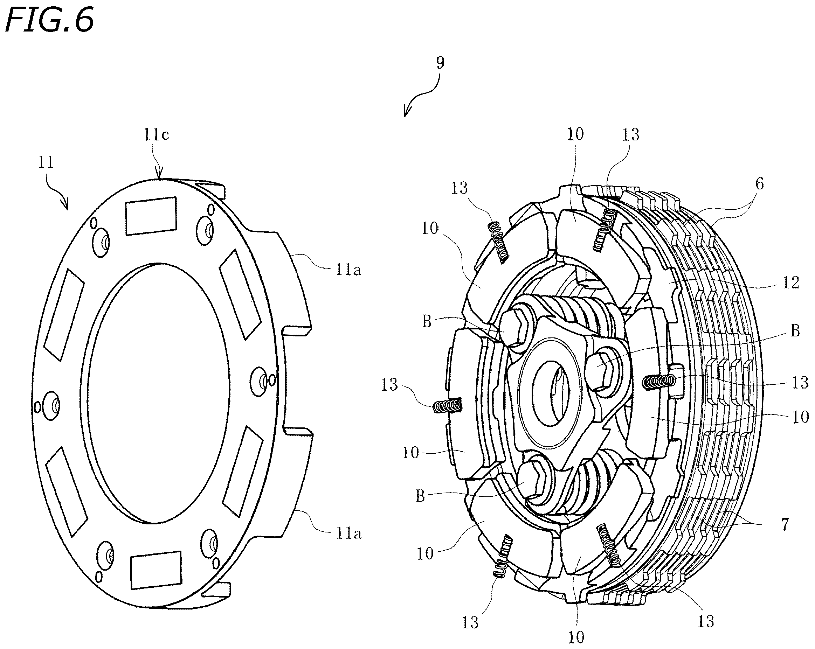

As illustrated in FIG. 6, the centrifugal clutch means 9 includes: the weight members 10; a holding member 11 holding the weight members 10 such that the weight members 10 are each movable between the radially inner position and the radially outer position; a pressing member 12; and urging springs 13.

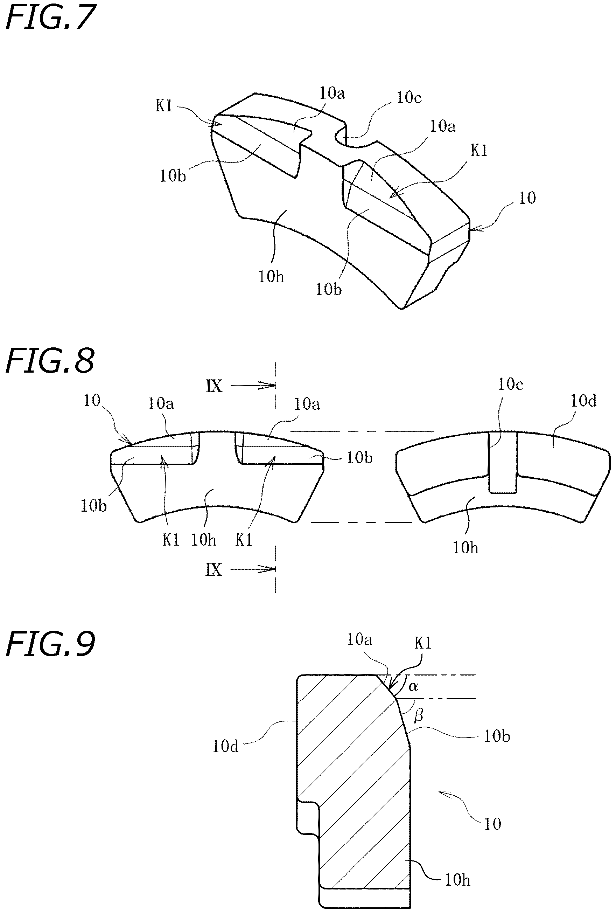

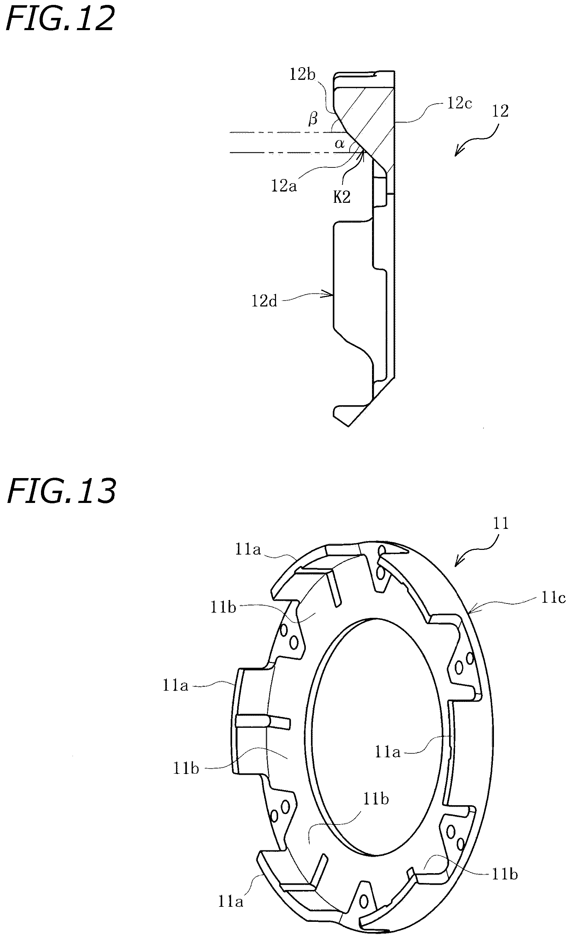

As illustrated in FIGS. 7 to 9, the weight members 10 each include: a body 10h; a weight member side cam surface K1 provided on the body 10h; a groove 10c which is provided in the body 10h and in which the associated urging spring 13 (see FIG. 6) is held; and a sliding surface 10d provided on the body 10h and slidable relative to an associated one of surfaces 11b (see FIG. 13) of the holding member 11. The weight members 10 are housed in the holding member 11. The weight members 10 are each held at the radially inner position (see FIG. 14), with no centrifugal force being applied thereto. Upon application of centrifugal force to the weight members 10, the weight members 10 each move radially outward against an urging force of the associated urging spring 13 and then reach the radially outer position (see FIG. 16). In the course of movement from the radially inner position to the radially outer position, the weight members 10 cause the clutch member 4 (i.e., the second clutch member 4b in this embodiment) to move in the direction toward the pressure member 5 (i.e., the direction indicated by the arrow DR2 in FIG. 2). The weight members 10 are configured to press the driving and driven clutch plates 6 and 7 against each other through the pressing member 12 in the course of movement of each weight member 10 from the radially inner position to the radially outer position. The weight members 10 are not required to press the driving and driven clutch plates 6 and 7 against each other through the pressing member 12 at the instant when each weight member 10 starts moving from the radially inner position toward the radially outer position. The weight members 10 may press the driving and driven clutch plates 6 and 7 against each other through the pressing member 12 after each weight member 10 has moved from the radially inner position toward the radially outer position by a predetermined distance.

As illustrated in FIG. 14, the weight member side cam surfaces K1 are provided such that each weight member side cam surface K1 is able to come into contact with an associated pressing member side cam surface K2 (which will be described below). The weight member side cam surfaces K1 are portions of the weight members 10 that come into contact with the pressing member 12. As illustrated in FIG. 9, each weight member 10 includes, on the weight member side cam surface K1, a first inclined surface 10a and a second inclined surface 10b whose inclination angle relative to the axial direction of the output shaft 3 is greater than that of the first inclined surface 10a. The first inclined surface 10a is located radially outward of the second inclined surface 10b. The first inclined surface 10a is a flat surface. The second inclined surface 10b is a flat surface. An inclination angle α of the first inclined surface 10a with respect to the axial direction of the output shaft 3 is smaller than an inclination angle β of the second inclined surface 10b with respect to the axial direction of the output shaft 3. In the present embodiment, the first inclined surface 10a and the second inclined surface 10b are continuous with each other. Alternatively, the first inclined surface 10a and the second inclined surface 10b may be connected to each other through a curved surface. Thus, the centrifugal clutch means 9 includes, on a portion of each weight member 10 that comes into contact with the pressing member 12 (which is the weight member side cam surface K1 in this embodiment), the first inclined surface 10a and the second inclined surface 10b. When an engine rotational speed is increased to a predetermined rotational speed such that each weight member 10 moves radially by a predetermined distance, a distance moved by the pressing member 12 in the axial direction of the output shaft 3 along the second inclined surfaces 10b is shorter than a distance moved by the pressing member 12 in the axial direction of the output shaft 3 along the first inclined surfaces 10a. A thrust produced on the second inclined surfaces 10b by the weight members 10 is greater than a thrust produced on the first inclined surfaces 10a by the weight members 10. Each first inclined surface 10a is an example of a first region. Each second inclined surface 10b is an example of a second region.

As illustrated in FIG. 2, the holding member 11 holds the weight members 10 such that the weight members 10 are each movable between the radially inner position and the radially outer position. As illustrated in FIG. 13, the holding member 11 includes: an annular body 11c; walls 11a extending from an outer peripheral edge of the body 11c; and the surfaces 11b on which the weight members 10 slide. Each wall 11a comes into contact with one end of the associated urging spring 13.

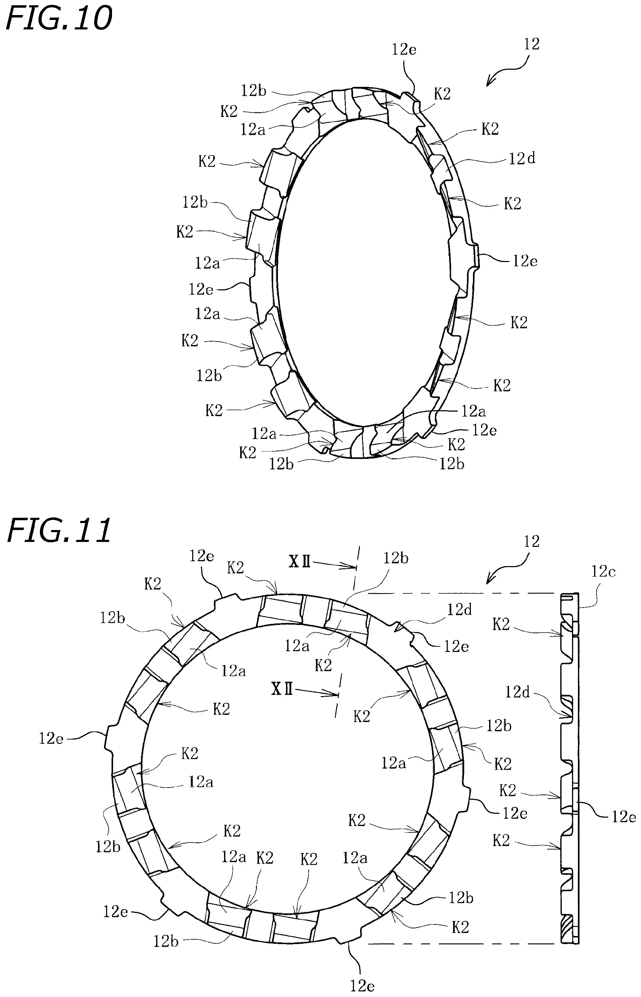

The pressing member 12 is provided such that the pressing member 12 is able to come into contact with the weight members 10. The pressing member 12 is configured to move in a direction in which the driving and driven clutch plates 6 and 7 are to be pressed against each other (i.e., the direction indicated by the arrow DR2 in FIG. 14) upon movement of each weight member 10 from the radially inner position (see FIG. 14) to the radially outer position (see FIG. 16). The pressing member 12 is configured to be able to press the driving and driven clutch plates 6 and 7 against each other. As illustrated in FIGS. 10 to 12, the pressing member 12 includes: an annular body 12d; the pressing member side cam surfaces K2 provided in a circumferential direction of the body 12d; a pushing surface 12c located opposite to a surface of the body 12d provided with the pressing member side cam surface K2; and protrusions 12e provided in the circumferential direction of the body 12d. The pressing member 12 is attached to the clutch housing 2 by fitting the protrusions 12e to the cut-outs 2a (see FIG. 4) of the clutch housing 2. The pressing member 12 is provided so as to be movable in the axial direction of the clutch housing 2 (which corresponds to the axial direction of the output shaft 3). The pressing member 12 is in engagement with the clutch housing 2 in its rotational direction and provided so as to be rotatable together with the clutch housing 2.

As illustrated in FIG. 14, the pressing member side cam surfaces K2 are provided such that each pressing member side cam surface K2 is able to come into contact with the associated weight member side cam surface K1. The pressing member side cam surfaces K2 are portions of the pressing member 12 that come into contact with the weight members 10. As illustrated in FIG. 12, the pressing member 12 includes, on each pressing member side cam surface K2, a first inclined surface 12a and a second inclined surface 12b whose inclination angle relative to the axial direction of the output shaft 3 is greater than that of the first inclined surface 12a. The first inclined surfaces 12a are located radially inward of the second inclined surfaces 12b. Each first inclined surface 12a is a flat surface. Each second inclined surface 12b is a flat surface. An inclination angle α of each first inclined surface 12a with respect to the axial direction of the output shaft 3 is smaller than an inclination angle β of each second inclined surface 12b with respect to the axial direction of the output shaft 3. The first inclined surfaces 12a are provided such that each first inclined surface 12a is able to come into contact with the first inclined surface 10a of the associated weight member side cam surface K1. The second inclined surfaces 12b are provided such that each second inclined surface 12b is able to come into contact with the second inclined surface 10b of the associated weight member side cam surface K1. In the present embodiment, the first inclined surfaces 12a and the second inclined surfaces 12b are continuous with each other. Alternatively, the first inclined surfaces 12a and the second inclined surfaces 12b may be connected to each other through curved surfaces. Thus, the centrifugal clutch means 9 includes, on portions of the pressing member 12 that come into contact with the weight members 10 (which are the pressing member side cam surfaces K2 in this embodiment), the first inclined surfaces 12a and the second inclined surfaces 12b. When the engine rotational speed is increased to the predetermined rotational speed such that each weight member 10 moves radially by the predetermined distance, a distance moved by the pressing member 12 in the axial direction of the output shaft 3 along the second inclined surfaces 12b is shorter than a distance moved by the pressing member 12 in the axial direction of the output shaft 3 along the first inclined surfaces 12a. A thrust produced on the second inclined surfaces 12b by the weight members 10 is greater than a thrust produced on the first inclined surfaces 12a by the weight members 10. Each first inclined surface 12a is an example of the first region. Each second inclined surface 12b is an example of the second region.

A thrust produced by the weight members 10 in the course of movement of each weight member 10 from the radially inner position (see FIG. 14) to the radially outer position (see FIG. 16) is transmitted to the pressing member 12 through the weight member side cam surfaces K1 and the pressing member side cam surfaces K2. This moves the pressing member 12 in the direction in which the driving and driven clutch plates 6 and 7 are to be pressed against each other (i.e., the direction indicated by the arrow DR2 in FIG. 14). As illustrated in FIGS. 14 to 16, the weight member side cam surfaces K1 and the pressing member side cam surfaces K2 are configured such that inclined surfaces acting as cam surfaces change from the first inclined surfaces 10a and 12a to the second inclined surfaces 10b and 12b in the course of movement of each weight member 10 from the radially inner position (see FIG. 14) to the radially outer position (see FIG. 16). In the course of movement of each weight member 10 from the radially inner position to the radially outer position, the first inclined surfaces 10a and 12a act as the cam surfaces before the driving and driven clutch plates 6 and 7 start being pressed against each other, and the second inclined surfaces 10b and 12b act as the cam surfaces after the driving and driven clutch plates 6 and 7 have started being pressed against each other.

As illustrated in FIG. 14, in the course of movement of each weight member 10 from the radially inner position to the radially outer position, the first inclined surfaces 10a and the first inclined surfaces 12a come into contact with each other and slide relative to each other on the weight member side cam surfaces K1 and the pressing member side cam surfaces K2 before the driving and driven clutch plates 6 and 7 start being pressed against each other. Thus, the thrust produced during movement of each weight member 10 from the radially inner position toward the radially outer position is transmitted to the pressing member 12 through the first inclined surfaces 10a and first inclined surfaces 12a. The pressing member 12 moves in the direction in which the driving and driven clutch plates 6 and 7 are to be pressed against each other (i.e., the direction indicated by the arrow DR2 in FIG. 14). In this case, the thrust produced by the weight members 10 and transmitted to the pressing member 12 is relatively small, but the distance moved by the pressing member 12 in the axial direction of the output shaft 3 is relatively great.

As illustrated in FIG. 15, when the weight members 10 each further move from the radially inner position toward the radially outer position such that the driving and driven clutch plates 6 and 7 start being pressed against each other, a boundary between the first inclined surface 10a and the second inclined surface 10b of each weight member side cam surface K1 and a boundary between the first inclined surface 12a and the second inclined surface 12b of each pressing member side cam surface K2 are in contact with each other.

As illustrated in FIG. 16, upon further movement of each weight member 10 from the radially inner position to the radially outer position, the second inclined surfaces 10b and the second inclined surfaces 12b come into contact with each other and slide relative to each other on the weight member side cam surfaces K1 and the pressing member side cam surfaces K2 after the driving and driven clutch plates 6 and 7 have started being pressed against each other. Thus, the thrust produced during movement of each weight member 10 from the radially inner position to the radially outer position is transmitted to the pressing member 12 through the second inclined surfaces 10b and the second inclined surfaces 12b. The pressing member 12 further moves in the direction in which the driving and driven clutch plates 6 and 7 are to be pressed against each other (i.e., the direction indicated by the arrow DR2 in FIG. 16). In this case, the distance moved by the pressing member 12 in the axial direction of the output shaft 3 is relatively short, but the thrust produced by the weight members 10 and transmitted to the pressing member 12 is relatively great.

The weight members 10 and the pressing member 12 may be configured to, in the course of an increase in the rotational speed of the engine E, come into contact with each other on the first inclined surfaces 10a and 12a (i.e., come into contact with each other on the first regions) and then come into contact with each other on the second inclined surfaces 10b and 12b (i.e., come into contact with each other on the second regions). The weight members 10 and the pressing member 12 may be configured to, when the rotational speed of the engine E is lower than a rotational speed at which the driving and driven clutch plates 6 and 7 start being pressed against each other, come into contact with each other on the first inclined surfaces 10a and 12a (i.e., come into contact with each other on the first regions) and then come into contact with each other on the second inclined surfaces 10b and 12b (i.e., come into contact with each other on the second regions). The weight members 10 and the pressing member 12 may be configured to, when the rotational speed of the engine E is lower than a rotational speed at which the driving and driven clutch plates 6 and 7 are fully pressed against each other, come into contact with each other on the first inclined surfaces 10a and 12a (i.e., come into contact with each other on the first regions) and then come into contact with each other on the second inclined surfaces 10b and 12b (i.e., come into contact with each other on the second regions). When the rotational speed of the engine E is higher than the rotational speed of the engine E at which the driving and driven clutch plates 6 and 7 are fully pressed against each other, the driving and driven clutch plates 6 and 7 are kept being pressed against each other.

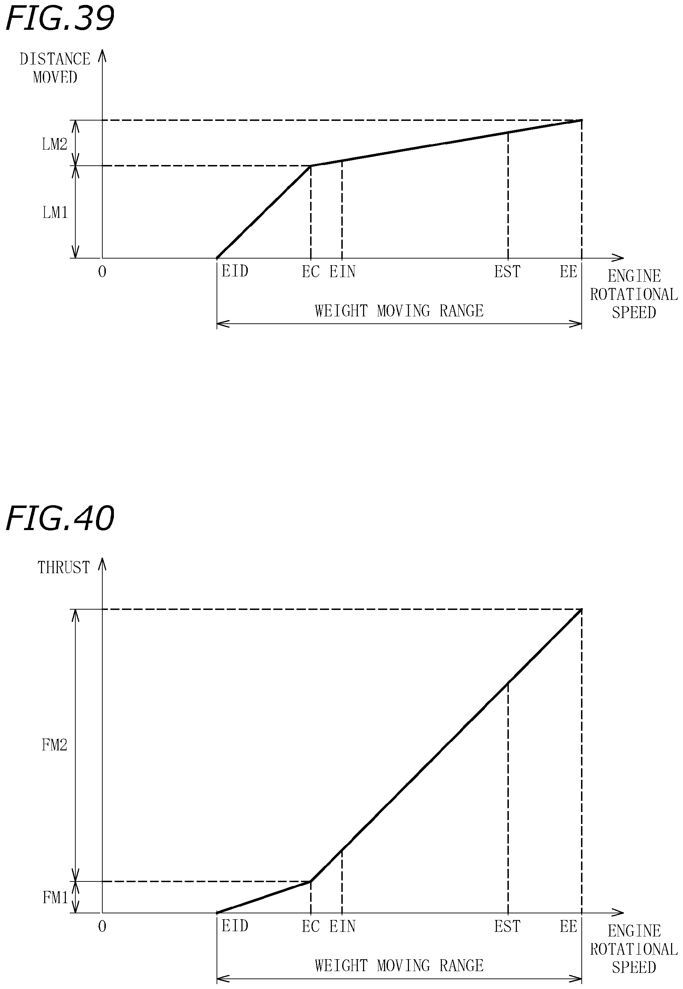

FIG. 39 is a graph illustrating relationships between rotational speeds of the engine E and distances moved by the pressing member 12 in the axial direction of the output shaft 3. In FIG. 39, the horizontal axis represents the rotational speeds of the engine E, and the vertical axis represents the distances moved by the pressing member 12 in the axial direction of the output shaft 3. FIG. 40 is a graph illustrating relationships between the rotational speeds of the engine E and thrusts produced by the weight members 10. In FIG. 40, the horizontal axis represents the rotational speeds of the engine E, and the vertical axis represents the thrusts produced by the weight members 10. In FIGS. 39 and 40, a rotational speed EID represents the rotational speed of the engine E in an idling state, a rotational speed EC represents the rotational speed of the engine E when the driving and driven clutch plates 6 and 7 start being pressed against each other (i.e., when the inclined surfaces acting as the cam surfaces change from the first inclined surfaces 10a and 12a to the second inclined surfaces 10b and 12b), a rotational speed EIN represents the rotational speed of the engine E when the driving force of the engine E has started being transmitted to the driving wheel T, a rotational speed EST represents the rotational speed of the engine E when the driving and driven clutch plates 6 and 7 have been completely pressed against each other (i.e., when the driving and driven clutch plates 6 and 7 have been fully pressed against each other), and a rotational speed EE represents the rotational speed of the engine E when the weight members 10 have each reached the radially outer position. As illustrated in FIGS. 39 and 40, when the rotational speed of the engine E falls within the range of between the rotational speed EID and the rotational speed EC, a distance LM1 moved by the pressing member 12 in the axial direction of the output shaft 3 is relatively great, and a thrust FM1 produced by the weight members 10 is relatively small. When the rotational speed of the engine E falls within the range of between the rotational speed EC and the rotational speed EE, a distance LM2 moved by the pressing member 12 in the axial direction of the output shaft 3 is relatively small (Distance Moved LM2 < Distance Moved LM1), and a thrust FM2 produced by the weight members 10 is relatively great (Thrust FM2 > Thrust FM1).

As described above, the centrifugal clutch means 9 of the power transmission apparatus K according to the present embodiment includes, on the weight member side cam surfaces K1, the first inclined surfaces 10a and 12a and the second inclined surfaces 10b and 12b whose inclination angles with respect to the axial direction of the output shaft 3 are greater than those of the first inclined surfaces 10a and 12a. The above-described embodiment is able to, in accordance with a driving status, allow the pressing member 12 to move a required distance in the axial direction of the output shaft 3 and allow the weight members 10 to produce a required thrust.

In the power transmission apparatus K according to the present embodiment, the weight members 10 and the pressing member 12 may come into contact with each other on the first inclined surfaces 10a and 12a and then come into contact with each other on the second inclined surfaces 10b and 12b in the course of an increase in the rotational speed of the engine E. The above-described embodiment is able to first increase the distance moved by the pressing member 12 in the axial direction and then increase the thrust produced by the weight members 10.

In the power transmission apparatus K according to the present embodiment, each first inclined surface 10a and the associated second inclined surface 10b may be connected to each other through a curved surface, and each first inclined surface 12a and the associated second inclined surface 12b may be connected to each other through a curved surface. In the above-described embodiment, each first inclined surface 10a and the associated second inclined surface 10b are connected to each other through a curved surface, and each first inclined surface 12a and the associated second inclined surface 12b are connected to each other through a curved surface. Accordingly, the above-described embodiment enables portions of the weight members 10 and the pressing member 12 that come into contact with each other to smoothly change from the first inclined surfaces 10a and 12a to the second inclined surfaces 10b and 12b.

In the power transmission apparatus K according to the present embodiment, when the rotational speed of the engine E is lower than the rotational speed at which the driving and driven clutch plates 6 and 7 start being pressed against each other, the weight members 10 and the pressing member 12 may come into contact with each other on the first inclined surfaces 10a and 12a and then come into contact with each other on the second inclined surfaces 10b and 12b. In the above-described embodiment, the portions of the weight members 10 and the pressing member 12 that come into contact with each other change from the first inclined surfaces 10a and 12a to the second inclined surfaces 10b and 12b when the rotational speed of the engine E is lower than the rotational speed at which the driving and driven clutch plates 6 and 7 start being pressed against each other. Accordingly, the above-described embodiment enables the pressing member 12 to move a required distance in the axial direction of the output shaft 3 before the driving and driven clutch plates 6 and 7 start being pressed against each other, and enables the weight members 10 to produce a required thrust after the driving and driven clutch plates 6 and 7 have started being pressed against each other.

In the power transmission apparatus K according to the present embodiment, when the rotational speed of the engine E is lower than the rotational speed at which the driving and driven clutch plates 6 and 7 are fully pressed against each other, the weight members 10 and the pressing member 12 may come into contact with each other on the first inclined surfaces 10a and 12a and then come into contact with each other on the second inclined surfaces 10b and 12b. In the above-described embodiment, the portions of the weight members 10 and the pressing member 12 that come into contact with each other change from the first inclined surfaces 10a and 12a to the second inclined surfaces 10b and 12b when the rotational speed of the engine E is lower than the rotational speed at which the driving and driven clutch plates 6 and 7 are fully pressed against each other. Accordingly, the above-described embodiment enables the pressing member 12 to move a required distance in the axial direction of the output shaft 3 before the driving and driven clutch plates 6 and 7 are fully pressed against each other, and enables the weight members 10 to produce a required thrust after the driving and driven clutch plates 6 and 7 have been fully pressed against each other.

In the power transmission apparatus K according to the present embodiment, the weight members 10 may each include the sliding surface 10d that is able to slide relative to the holding member 11, the weight members 10 may include, on their portions that come into contact with the pressing member 12 (e.g., the weight member side cam surfaces K1), the first inclined surfaces 10a and the second inclined surfaces 10b, and the pressing member 12 may include, on their portions that come into contact with the weight members 10 (e.g., the pressing member side cam surfaces K2), the first inclined surfaces 12a and the second inclined surfaces 12b. The above-described embodiment enables favorable application of the weight members 10 including the sliding surfaces 10d that are able to slide relative to the holding member 11.

In the power transmission apparatus K according to the present embodiment, the centrifugal clutch means 9 includes: the first inclined surfaces 10a and 12a serving as the first regions; and the second inclined surfaces 10b and 12b serving as the second regions that cause the pressing member 12 to move in the axial direction of the output shaft 3 by a shorter distance than the first regions. The above-described embodiment is able to, in accordance with a driving status, allow the pressing member 12 to move a required distance in the axial direction of the output shaft 3 and allow the weight members 10 to produce a required thrust. The second regions cause the weight members 10 to produce a greater thrust than the first regions.

In the power transmission apparatus K according to the present embodiment, the weight members 10 and the pressing member 12 may come into contact with each other on the first inclined surfaces 10a and 12a, which serve as the first regions, and then come into contact with each other on the second inclined surfaces 10b and 12b, which serve as the second regions, in the course of an increase in the rotational speed of the engine E. The above-described embodiment is able to first increase the distance moved by the pressing member 12 in the axial direction and then increase the thrust produced by the weight members 10.

In the power transmission apparatus K according to the present embodiment, the first regions may be the first inclined surfaces 10a and 12a that are flat surfaces, the second regions may be the second inclined surfaces 10b and 12b that are flat surfaces, and the weight members 10 and the pressing member 12 may be configured to be able to come into contact with each other on the first inclined surfaces 10a and 12a and on the second inclined surfaces 10b and 12b. The above-described embodiment is able to smoothly change the distance moved by the pressing member 12 and the thrust produced by the weight members 10 through the first regions and the second regions.

### Second Embodiment

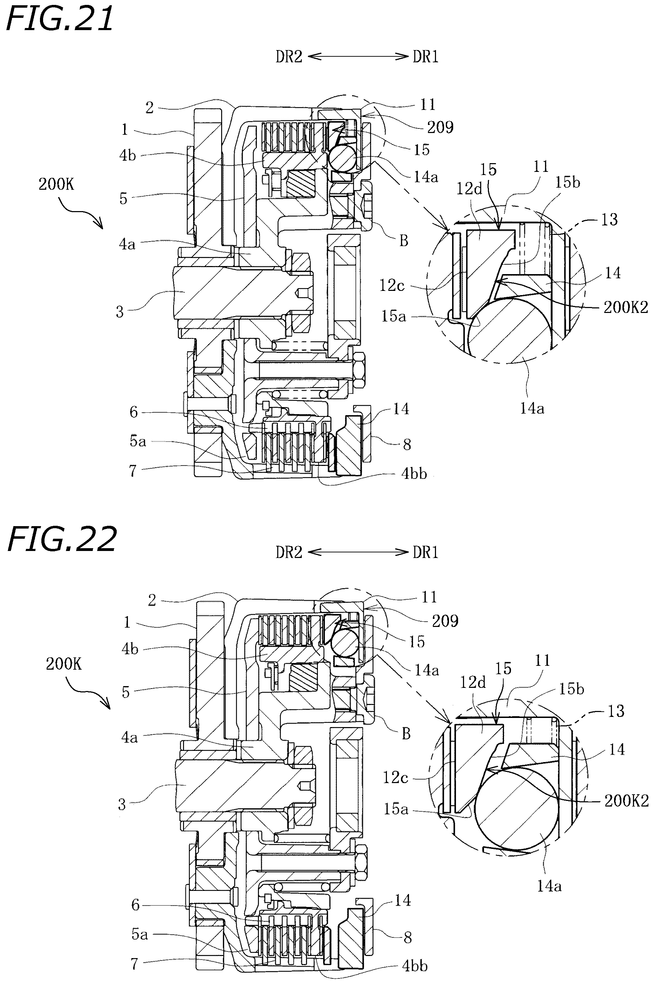

As illustrated in FIGS. 21 to 23, a power transmission apparatus 200K according to a second embodiment includes a centrifugal clutch means 209 including weight members 14. Elements similar to those described in the first embodiment are identified by the same reference signs and will not be described in detail.

As illustrated in FIG. 21, the centrifugal clutch means 209 includes: the weight members 14; a holding member 11 holding the weight members 14 such that the weight members 14 are each movable between a radially inner position and a radially outer position; a pressing member 15; and urging springs 13.

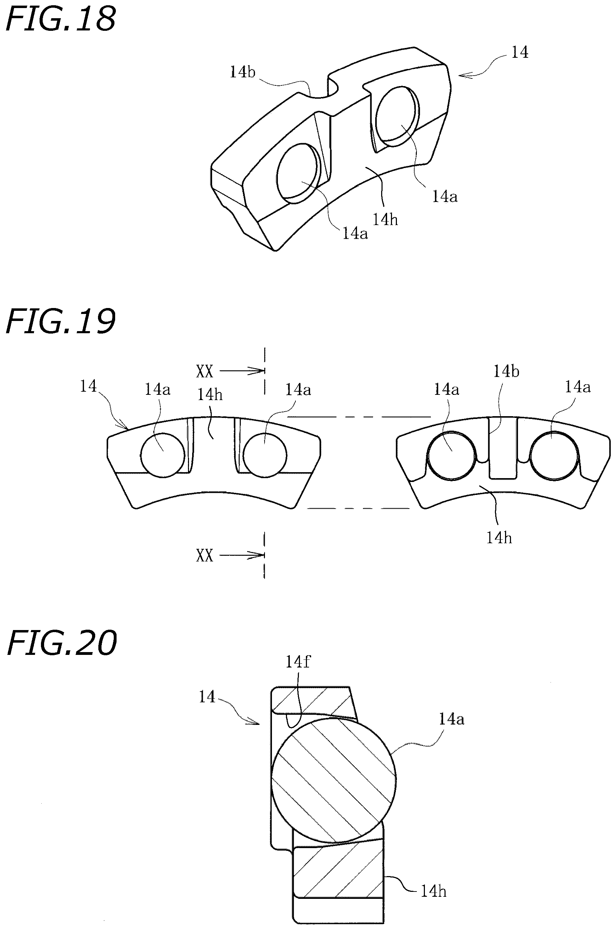

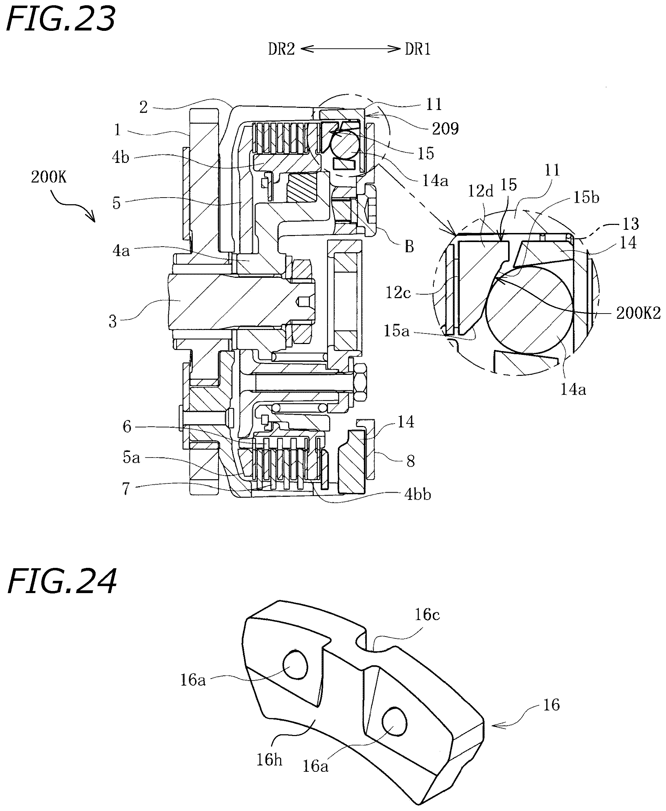

As illustrated in FIGS. 18 to 20, the weight members 14 are each configured so as to be movable from the radially inner position (see FIG. 21) to the radially outer position (see FIG. 23) with centrifugal force produced by rotation of a clutch housing 2. The weight members 14 each include: a body 14h; spherical members 14a movable relative to the holding member 11 while being in point contact with the holding member 11 or rolling relative to the holding member 11; holding holes 14f which are provided in the body 14h and in which the spherical members 14a are held; and a groove 14b which is provided in the body 14h and in which the associated urging spring 13 is held. The spherical members 14a are each an example of a contact portion.

The pressing member 15 is provided such that the pressing member 15 is able to come into contact with the weight members 14. The pressing member 15 is configured to move in a direction in which driving and driven clutch plates 6 and 7 are to be pressed against each other (i.e., a direction indicated by an arrow DR2 in FIG. 21) upon movement of each weight member 14 from the radially inner position (see FIG. 21) to the radially outer position (see FIG. 23). The pressing member 15 is configured to be able to press the driving and driven clutch plates 6 and 7 against each other. As illustrated in FIG. 21, the pressing member 15 includes a pressing member side cam surface 200K2 provided in a circumferential direction of its body 12d.

As illustrated in FIG. 21, the pressing member side cam surface 200K2 is provided such that the pressing member side cam surface 200K2 is able to come into contact with the spherical members 14a. The pressing member side cam surface 200K2 is a portion of the pressing member 15 that comes into contact with the weight members 14. The pressing member 15 includes, on the pressing member side cam surface 200K2, a first inclined surface 15a and a second inclined surface 15b whose inclination angle relative to an axial direction of an output shaft 3 is greater than that of the first inclined surface 15a. The first inclined surface 15a is located radially inward of the second inclined surface 15b. The first inclined surface 15a is a flat surface. The second inclined surface 15b is a curved surface. The first inclined surface 15a and the second inclined surface 15b are provided such that the first inclined surface 15a and the second inclined surface 15b are able to come into contact with the spherical members 14a. In the present embodiment, the first inclined surface 15a and the second inclined surface 15b are continuous with each other. Alternatively, the first inclined surface 15a and the second inclined surface 15b may be connected to each other through a curved surface. When an engine rotational speed is increased to a predetermined rotational speed such that each weight member 10 moves radially by a predetermined distance, a distance moved by the pressing member 15 in the axial direction of the output shaft 3 along the second inclined surface 15b is shorter than a distance moved by the pressing member 15 in the axial direction of the output shaft 3 along the first inclined surface 15a. When the engine rotational speed is increased to the predetermined rotational speed such that each weight member 10 moves radially by the predetermined distance, a thrust produced on the second inclined surface 15b by the weight members 14 is greater than a thrust produced on the first inclined surface 15a by the weight members 14. The first inclined surface 15a is an example of a first region. The second inclined surface 12b is an example of a second region.

A thrust produced by the weight members 14 in the course of movement of each weight member 14 from the radially inner position (see FIG. 21) to the radially outer position (see FIG. 23) is transmitted to the pressing member 15 through the spherical members 14a and the pressing member side cam surface 200K2. This moves the pressing member 15 in the direction in which the driving and driven clutch plates 6 and 7 are to be pressed against each other (i.e., the direction indicated by the arrow DR2 in FIG. 21). As illustrated in FIGS. 21 to 23, the spherical members 14a and the pressing member side cam surface 200K2 are configured such that an inclined surface acting as a cam surface for the spherical members 14a changes from the first inclined surface 15a to the second inclined surface 15b in the course of movement of each weight member 14 from the radially inner position (see FIG. 21) to the radially outer position (see FIG. 23). In the course of movement of each weight member 14 from the radially inner position to the radially outer position, the first inclined surface 15a acts as the cam surface before the driving and driven clutch plates 6 and 7 start being pressed against each other, and the second inclined surface 15b acts as the cam surface after the driving and driven clutch plates 6 and 7 have started being pressed against each other.

As illustrated in FIG. 21, each spherical member 14a and the first inclined surface 15a, which is defined on the pressing member side cam surface 200K2, come into contact with each other and slide relative to each other before the driving and driven clutch plates 6 and 7 start being pressed against each other in the course of movement of each weight member 14 from the radially inner position to the radially outer position. Thus, the thrust produced during movement of each weight member 14 from the radially inner position toward the radially outer position is transmitted to the pressing member 15 through the spherical members 14a and the first inclined surface 15a. The pressing member 15 moves in the direction in which the driving and driven clutch plates 6 and 7 are to be pressed against each other (i.e., the direction indicated by the arrow DR2 in FIG. 21). In this case, the thrust produced by the weight members 14 and transmitted to the pressing member 15 is relatively small, but the distance moved by the pressing member 15 in the axial direction of the output shaft 3 is relatively great.

As illustrated in FIG. 22, when the weight members 14 each further move from the radially inner position toward the radially outer position such that the driving and driven clutch plates 6 and 7 start being pressed against each other, each spherical member 14a and a boundary between the first inclined surface 15a and the second inclined surface 15b of the pressing member side cam surface 200K2 are in contact with each other.

As illustrated in FIG. 23, upon further movement of each weight member 14 from the radially inner position to the radially outer position, each spherical member 14a and the second inclined surface 15b, which is defined on the pressing member side cam surface 200K2, come into contact with each other and slide relative to each other after the driving and driven clutch plates 6 and 7 have started being pressed against each other. Thus, the thrust produced during movement of each weight member 14 from the radially inner position to the radially outer position is transmitted to the pressing member 15 through the spherical members 14a and the second inclined surface 15b. The pressing member 15 further moves in the direction in which the driving and driven clutch plates 6 and 7 are to be pressed against each other (i.e., the direction indicated by the arrow DR2 in FIG. 23). In this case, the distance moved by the pressing member 15 in the axial direction of the output shaft 3 is relatively short, but the thrust produced by the weight members 14 and transmitted to the pressing member 15 is relatively great.

In the power transmission apparatus 200K according to the present embodiment, the weight members 14 each include the spherical members 14a movable relative to the holding member 11 while being in point contact with the holding member 11, and the pressing member 15 includes, on the pressing member side cam surface 200K2, the first inclined surface 15a and the second inclined surface 15b. The above-described embodiment enables favorable application of the weight members 14 including the spherical members 14a movable relative to the holding member 11 while being in point contact with the holding member 11.

### Third Embodiment

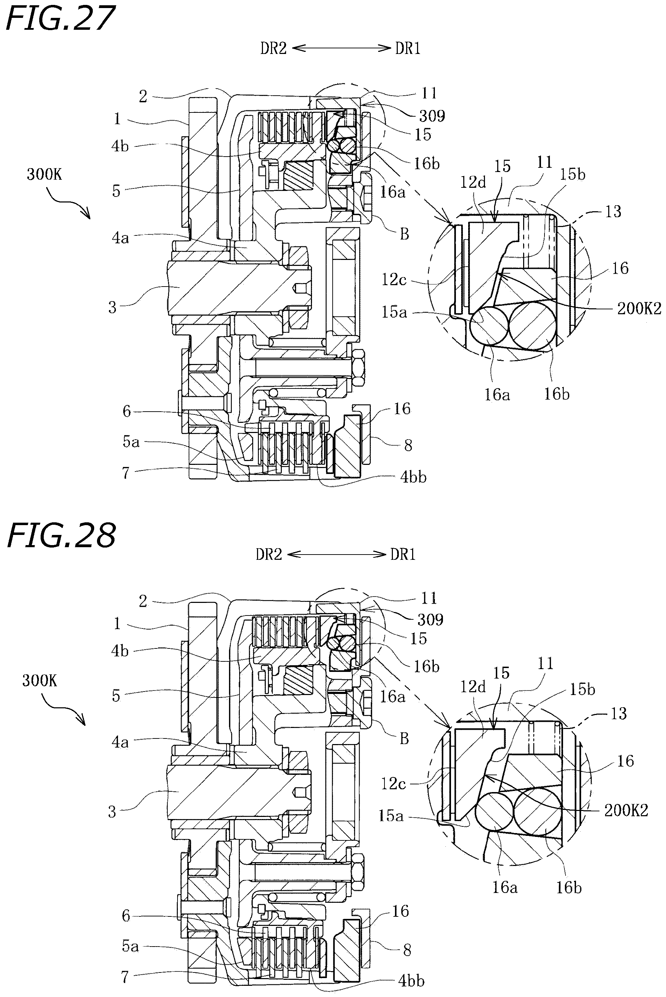

As illustrated in FIGS. 27 to 29, a power transmission apparatus 300K according to a third embodiment includes a centrifugal clutch means 309 including weight members 16. Elements similar to those described in the first embodiment and the second embodiment are identified by the same reference signs and will not be described in detail.

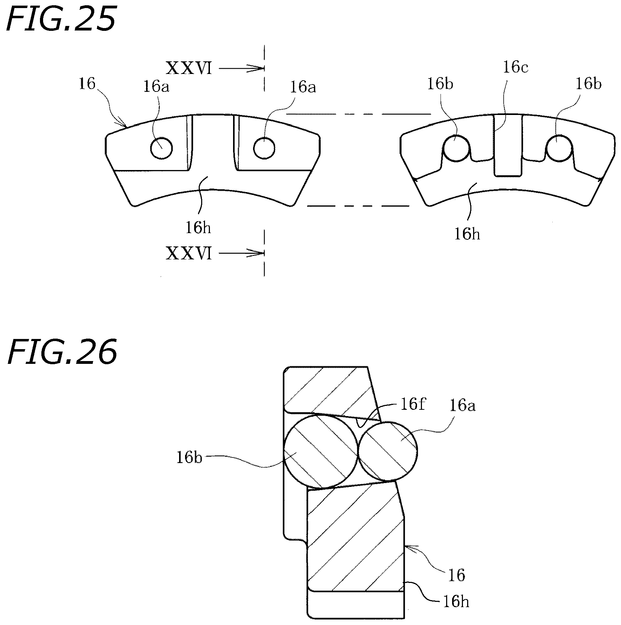

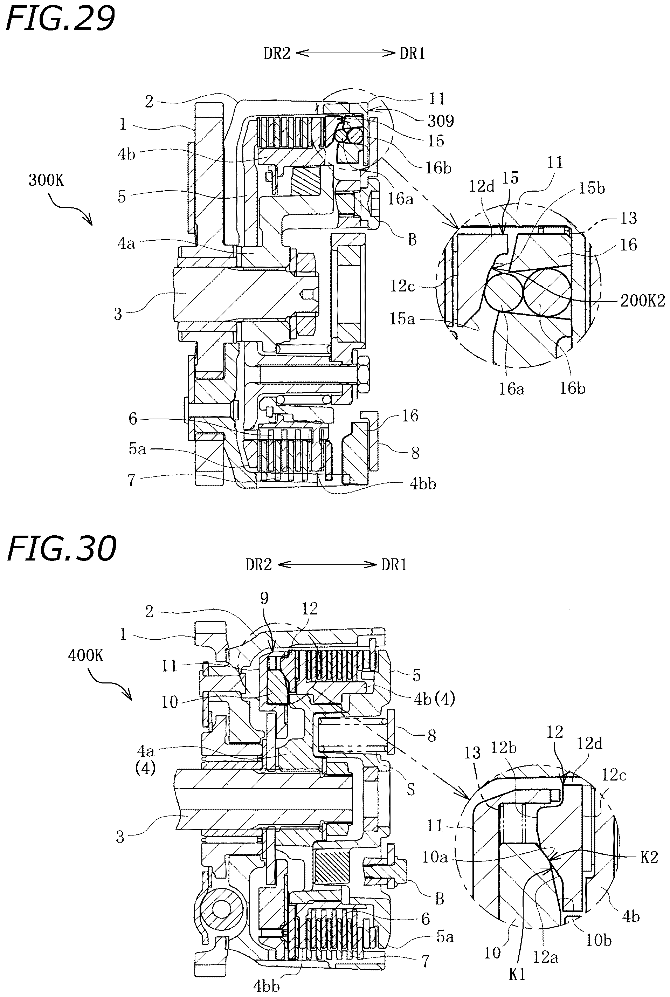

As illustrated in FIGS. 24 to 26, the weight members 16 are each configured so as to be movable from a radially inner position (see FIG. 27) to a radially outer position (see FIG. 29) with centrifugal force produced by rotation of a clutch housing 2. The weight members 16 each include: a body 16h; a pair of rolling members 16a and 16b movable relative to a holding member 11 while being in point contact with the holding member 11 or rolling relative to the holding member 11; holding holes 16f which are provided in the body 16h and in which the rolling members 16a and 16b are held; and a groove 16c which is provided in the body 16h and in which an associated urging spring 13 is held. The rolling members 16a are provided such that the rolling members 16a are able to come into contact with a pressing member side cam surface 200K2. The rolling members 16b are provided such that the rolling members 16b are able to come into contact with the holding member 11. The rolling members 16a and 16b are held in the holding holes 16f such that the rolling members 16a and 16b are in contact with each other therein. The rolling members 16a and 16b are each an example of a contact portion.

A thrust produced by the weight members 16 in the course of movement of each weight member 16 from the radially inner position (see FIG. 27) to the radially outer position (see FIG. 29) is transmitted to a pressing member 15 through the rolling members 16a and 16b and the pressing member side cam surface 200K2. This moves the pressing member 15 in a direction in which driving and driven clutch plates 6 and 7 are to be pressed against each other (i.e., a direction indicated by an arrow DR2 in FIG. 27). As illustrated in FIGS. 27 to 29, the rolling members 16a and the pressing member side cam surface 200K2 are configured such that an inclined surface acting as a cam surface for the rolling members 16a changes from a first inclined surface 15a to a second inclined surface 15b in the course of movement of each weight member 16 from the radially inner position (see FIG. 27) to the radially outer position (see FIG. 29). In the course of movement of each weight member 16 from the radially inner position to the radially outer position, the first inclined surface 15a acts as the cam surface before the driving and driven clutch plates 6 and 7 start being pressed against each other, and the second inclined surface 15b acts as the cam surface after the driving and driven clutch plates 6 and 7 have started being pressed against each other. Functions and effects achieved by the third embodiment are similar to those achieved by the second embodiment.

The preferred embodiments of the present invention have been described thus far. Each of the foregoing embodiments, however, is only illustrative. The present invention may be embodied in various other forms.

### Fourth Embodiment

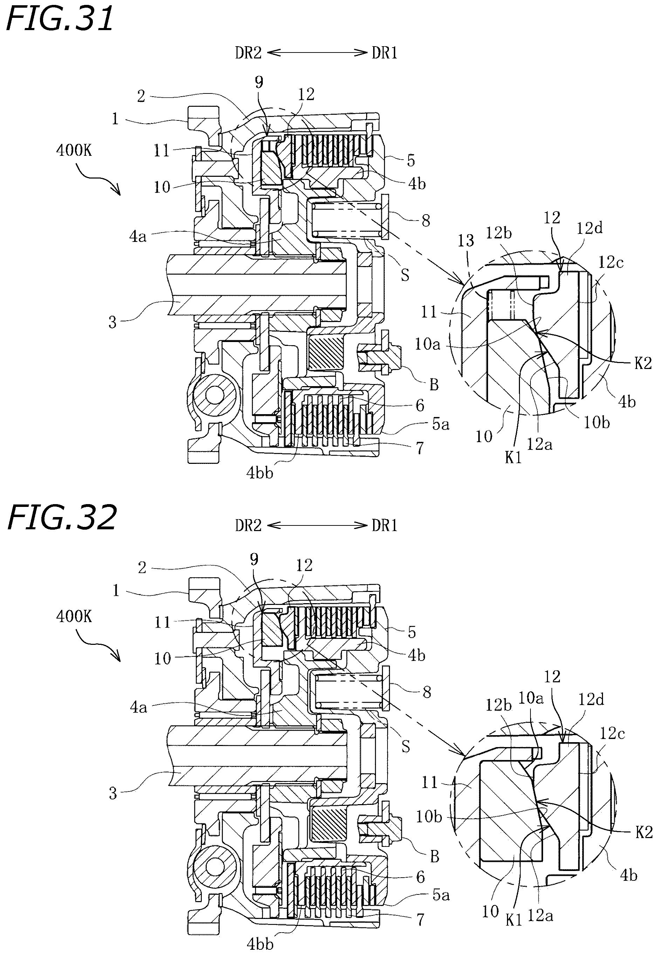

In the first embodiment described above, the centrifugal clutch means 9 is disposed adjacent to the opening of the clutch housing 2 (i.e., in the right portion of FIG. 2). The present invention, however, is not limited to this arrangement. In a power transmission apparatus 400K according to a fourth embodiment, for example, a centrifugal clutch means 9 may be disposed adjacent to the bottom of a clutch housing 2 (i.e., in the left portion of FIG. 30) as illustrated in FIGS. 30 to 32. The centrifugal clutch means 9 is disposed opposite to a pressure member 5, with driving and driven clutch plates 6 and 7 located therebetween. In this embodiment, the centrifugal clutch means 9 is disposed in a direction indicated by an arrow DR2 in FIG. 30 relative to a clutch member 4 (or more specifically, a second clutch member 4b).

### Fifth Embodiment

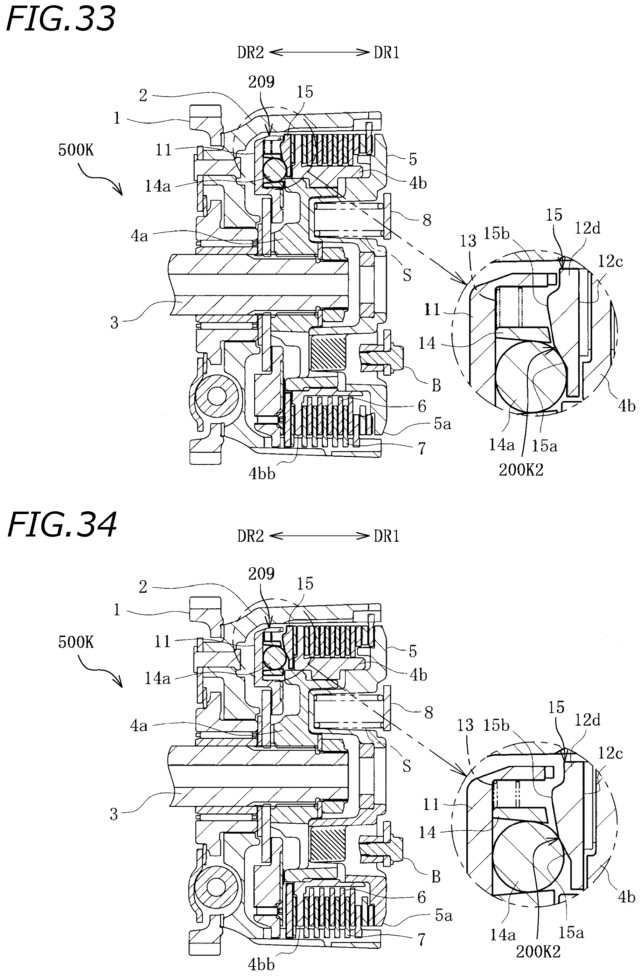

In the second embodiment described above, the centrifugal clutch means 209 is disposed adjacent to the opening of the clutch housing 2 (i.e., in the right portion of FIG. 21). The present invention, however, is not limited to this arrangement. In a power transmission apparatus 500K according to a fifth embodiment, for example, a centrifugal clutch means 209 may be disposed adjacent to the bottom of a clutch housing 2 (i.e., in the left portion of FIG. 33) as illustrated in FIGS. 33 to 35. The centrifugal clutch means 209 is disposed opposite to a pressure member 5, with driving and driven clutch plates 6 and 7 located therebetween. In this embodiment, the centrifugal clutch means 209 is disposed in a direction indicated by an arrow DR2 in FIG. 33 relative to a clutch member 4 (or more specifically, a second clutch member 4b).

### Sixth Embodiment

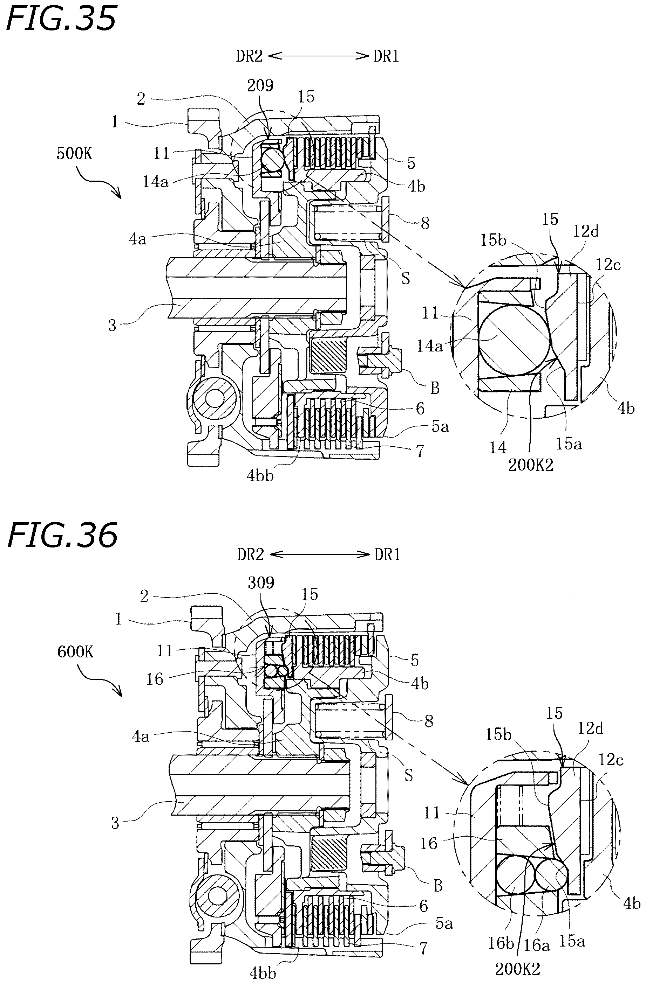

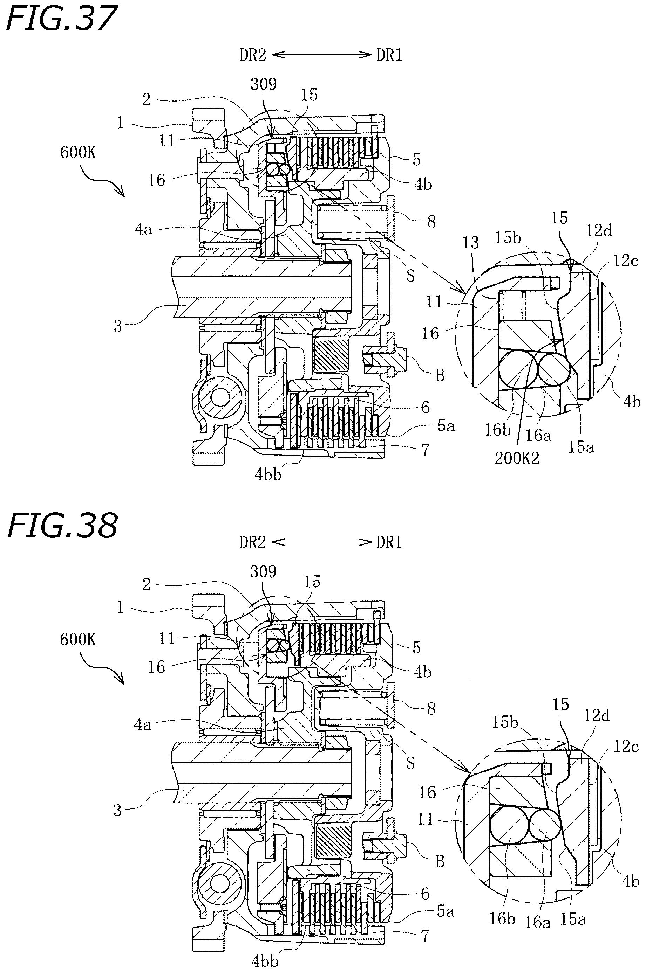

In the third embodiment described above, the centrifugal clutch means 309 is disposed adjacent to the opening of the clutch housing 2 (i.e., in the right portion of FIG. 27). The present invention, however, is not limited to this arrangement. In a power transmission apparatus 600K according to a sixth embodiment, for example, a centrifugal clutch means 309 may be disposed adjacent to the bottom of a clutch housing 2 (i.e., in the left portion of FIG. 36) as illustrated in FIGS. 36 to 38. The centrifugal clutch means 309 is disposed opposite to a pressure member 5, with driving and driven clutch plates 6 and 7 located therebetween. In this embodiment, the centrifugal clutch means 309 is disposed in a direction indicated by an arrow DR2 in FIG. 36 relative to a clutch member 4 (or more specifically, a second clutch member 4b).

In the foregoing embodiments, the centrifugal clutch means 9 includes, on each weight member side cam surface K1, the first inclined surface 10a and the second inclined surface 10b, and includes, on each pressing member side cam surface K2, the first inclined surface 12a and the second inclined surface 12b. The present invention, however, is not limited to this arrangement. The centrifugal clutch means 9 may include, on each weight member side cam surface K1, the first inclined surface 10a and the second inclined surface 10b, and may include, on each pressing member side cam surface K2, neither the first inclined surface 12a nor the second inclined surface 12b. Alternatively, the centrifugal clutch means 9 may include, on each weight member side cam surface K1, neither the first inclined surface 10a nor the second inclined surface 10b, and may include, on each pressing member side cam surface K2, the first inclined surface 12a and the second inclined surface 12b.

In the foregoing embodiments, the first inclined surfaces 10a, the second inclined surfaces 10b, the first inclined surfaces 12a, and the second inclined surfaces 12b are flat surfaces. Alternatively, these surfaces may be curved surfaces. When at least either the first inclined surfaces 10a or the second inclined surfaces 10b are curved surfaces, the curved surfaces preferably bulge outward (e.g., in the direction indicated by the arrow DR2 in FIG. 14). When at least either the first inclined surfaces 12a or the second inclined surfaces 12b are curved surfaces, the curved surfaces preferably bulge outward (e.g., in the direction indicated by the arrow DR1 in FIG. 14).

In the foregoing embodiments, the weight members 10 include, on the weight member side cam surfaces K1, the first inclined surfaces 10a and the second inclined surfaces 10b whose inclination angles relative to the axial direction of the output shaft 3 are greater than those of the first inclined surfaces 10a. The present invention, however, is not limited to this arrangement. The weight members 10 may include third inclined surfaces which are located radially outward of the first inclined surfaces 10a and whose inclination angles relative to the axial direction of the output shaft 3 are smaller than those of the first inclined surfaces 10a. The weight members 10 may include fourth inclined surfaces which are located radially inward of the second inclined surfaces 10b and whose inclination angles relative to the axial direction of the output shaft 3 are greater than those of the second inclined surfaces 10b.

In the foregoing embodiments, the pressing member 12 includes, on the pressing member side cam surfaces K2, the first inclined surfaces 12a and the second inclined surfaces 12b whose inclination angles relative to the axial direction of the output shaft 3 are greater than those of the first inclined surfaces 12a. The present invention, however, is not limited to this arrangement. The pressing member 12 may include third inclined surfaces which are located radially inward of the first inclined surfaces 12a and whose inclination angles relative to the axial direction of the output shaft 3 are smaller than those of the first inclined surfaces 12a. The pressing member 12 may include fourth inclined surfaces which are located radially outward of the second inclined surfaces 12b and whose inclination angles relative to the axial direction of the output shaft 3 are greater than those of the second inclined surfaces 12b.

In the foregoing embodiments, the pressing member 15 includes, on the pressing member side cam surface 200K2, the first inclined surface 15a and the second inclined surface 15b whose inclination angle relative to the axial direction of the output shaft 3 is greater than that of the first inclined surface 15a. The present invention, however, is not limited to this arrangement. The pressing member 15 may include a third inclined surface which is located radially inward of the first inclined surface 15a and whose inclination angle relative to the axial direction of the output shaft 3 is smaller than that of the first inclined surface 15a. The pressing member 15 may include a fourth inclined surface which is located radially outward of the second inclined surface 15b and whose inclination angle relative to the axial direction of the output shaft 3 is greater than that of the second inclined surface 15b.

In the foregoing embodiments, all of the driven clutch plates 7 are held by the clutch member 4 (e.g., the second clutch member 4b). The present invention, however, is not limited to this arrangement. In one example, first one(s) of the driven clutch plates 7 may be held by the clutch member 4 (e.g., the second clutch member 4b), and second one(s) of the driven clutch plates 7 may be held by the pressure member 5. In this case, the second one(s) of the driven clutch plates 7 is/are configured to be movable in an axial direction of the pressure member 5 (which corresponds to the axial direction of the output shaft 3) and rotatable together with the pressure member 5.

Each of the foregoing embodiments involves using the engine E as the driving source. The driving source, however, is not limited to the engine E. The driving source may be, for example, an electric motor.

The power transmission apparatuses according to the foregoing embodiments may find applications as various multiple-plate clutch type power transmission apparatuses for, for example, motorcycles, automobiles, three-wheel or four-wheel buggies, or general purpose machines.

### REFERENCE SIGNS LIST

- 1: input gear (input member)
- 2: clutch housing
- 3: output shaft (output member)
- 4: clutch member
- 4a: first clutch member
- 4b: second clutch member
- 5: pressure member
- 6: driving clutch plate
- 7: driven clutch plate
- 9: centrifugal clutch means
- 10: weight member
- 10a: first inclined surface
- 10b: second inclined surface
- 11: holding member
- 12: pressing member
- 12a: first inclined surface
- 12b: second inclined surface
- 14: weight member
- 14a: spherical member (contact portion)
- 15: pressing member
- 15a: first inclined surface
- 15b: second inclined surface
- 16: weight member
- 16a, 16b: rolling member (contact portion)
- K: power transmission apparatus
- K1: weight member side cam surface
- K2: pressing member side cam surface

## Claims

1. A power transmission apparatus comprising:
a clutch member to be rotated together with an input member that rotates with a driving force of a driving source, the clutch member being housed in a clutch housing holding driving clutch plates, the clutch member being connected to an output member that is able to rotate a wheel;
a pressure member provided so as to be movable toward or away from the clutch member, the pressure member being able to push the driving clutch plates and driven clutch plates arranged alternately with the driving clutch plates; and
a centrifugal clutch means including a weight member and a pressing member, the weight member being movable from a radially inner position to a radially outer position with centrifugal force produced by rotation of the clutch housing, the pressing member being provided such that the pressing member is able to come into contact with the weight member, the pressing member being configured to move in a direction in which the driving and driven clutch plates are to be pressed against each other upon movement of the weight member from the radially inner position to the radially outer position, the centrifugal clutch means being configured to, when the weight member is located at the radially outer position, press the driving and driven clutch plates against each other so as to enable transmission of the driving force of the driving source to the wheel and configured to, when the weight member is located at the radially inner position, release a pressing force exerted on the driving and driven clutch plates so as to be able to cut off transmission of the driving force of the driving source to the wheel, wherein
the weight member is configured to press the driving and driven clutch plates against each other through the pressing member in course of movement of the weight member from the radially inner position to the radially outer position, and
the centrifugal clutch means includes, on a portion of at least one of the weight member and the pressing member that comes into contact with the other one of the weight member and the pressing member, a first inclined surface and a second inclined surface whose inclination angle relative to an axial direction of the output member is greater than that of the first inclined surface.

2. The power transmission apparatus according to claim 1, wherein
in course of an increase in rotational speed of the driving source, the weight member and the pressing member come into contact with each other on the first inclined surface and then come into contact with each other on the second inclined surface.

3. The power transmission apparatus according to claim 1 or 2, wherein
the first inclined surface and the second inclined surface are connected to each other through a curved surface.

4. The power transmission apparatus according to claim 1 or 2, wherein
when a rotational speed of the driving source is lower than a rotational speed at which the driving and driven clutch plates start being pressed against each other, the weight member and the pressing member come into contact with each other on the first inclined surface and then come into contact with each other on the second inclined surface.

5. The power transmission apparatus according to claim 1 or 2, wherein
when a rotational speed of the driving source is lower than a rotational speed at which the driving and driven clutch plates are fully pressed against each other, the weight member and the pressing member come into contact with each other on the first inclined surface and then come into contact with each other on the second inclined surface.

6. The power transmission apparatus according to claim 1 or 2, wherein
the centrifugal clutch means includes a holding member holding the weight member such that the weight member is movable between the radially inner position and the radially outer position,
the weight member includes a sliding surface that is able to slide relative to the holding member,
the weight member includes, on its portion that comes into contact with the pressing member, the first inclined surface and the second inclined surface, and
the pressing member includes, on its portion that comes into contact with the weight member, the first inclined surface and the second inclined surface.

7. The power transmission apparatus according to claim 1 or 2, wherein
the centrifugal clutch means includes a holding member holding the weight member such that the weight member is movable between the radially inner position and the radially outer position,
the weight member includes a contact portion movable relative to the holding member while being in point contact with the holding member or rolling relative to the holding member, and
the pressing member includes, on its portion that comes into contact with the weight member, the first inclined surface and the second inclined surface.

8. A power transmission apparatus comprising:
a clutch member to be rotated together with an input member that rotates with a driving force of a driving source, the clutch member being housed in a clutch housing holding driving clutch plates, the clutch member being connected to an output member that is able to rotate a wheel;
a pressure member provided so as to be movable toward or away from the clutch member, the pressure member being able to push the driving clutch plates and driven clutch plates arranged alternately with the driving clutch plates; and
a centrifugal clutch means including a weight member and a pressing member, the weight member being movable from a radially inner position to a radially outer position with centrifugal force produced by rotation of the clutch housing, the pressing member being provided such that the pressing member is able to come into contact with the weight member, the pressing member being configured to move in a direction in which the driving and driven clutch plates are to be pressed against each other upon movement of the weight member from the radially inner position to the radially outer position, the centrifugal clutch means being configured to, when the weight member is located at the radially outer position, press the driving and driven clutch plates against each other so as to enable transmission of the driving force of the driving source to the wheel and configured to, when the weight member is located at the radially inner position, release a pressing force exerted on the driving and driven clutch plates so as to be able to cut off transmission of the driving force of the driving source to the wheel, wherein
the weight member is configured to press the driving and driven clutch plates against each other through the pressing member in course of movement of the weight member from the radially inner position to the radially outer position, and
the centrifugal clutch means includes, on a portion of at least one of the weight member and the pressing member that comes into contact with the other one of the weight member and the pressing member, a first region and a second region that causes the pressing member to move in an axial direction of the output member by a shorter distance than the first region.

9. The power transmission apparatus according to claim 8, wherein
in course of an increase in rotational speed of the driving source, the weight member and the pressing member come into contact with each other on the first region and then come into contact with each other on the second region.

10. The power transmission apparatus according to claim 8 or 9, wherein
the first region is a first inclined surface that is a flat surface,
the second region is a second inclined surface that is a flat surface, and
the weight member and the pressing member are configured to be able to come into contact with each other on the first inclined surface and on the second inclined surface.

11. A power transmission apparatus comprising:
a clutch member to be rotated together with an input member that rotates with a driving force of a driving source, the clutch member being housed in a clutch housing holding driving clutch plates, the clutch member being connected to an output member that is able to rotate a wheel;
a pressure member provided so as to be movable toward or away from the clutch member, the pressure member being able to push the driving clutch plates and driven clutch plates arranged alternately with the driving clutch plates; and
a centrifugal clutch means including a weight member and a pressing member, the weight member being movable from a radially inner position to a radially outer position with centrifugal force produced by rotation of the clutch housing, the pressing member being provided such that the pressing member is able to come into contact with the weight member, the pressing member being configured to move in a direction in which the driving and driven clutch plates are to be pressed against each other upon movement of the weight member from the radially inner position to the radially outer position, the centrifugal clutch means being configured to, when the weight member is located at the radially outer position, press the driving and driven clutch plates against each other so as to enable transmission of the driving force of the driving source to the wheel and configured to, when the weight member is located at the radially inner position, release a pressing force exerted on the driving and driven clutch plates so as to be able to cut off transmission of the driving force of the driving source to the wheel, wherein
the weight member is configured to press the driving and driven clutch plates against each other through the pressing member in course of movement of the weight member from the radially inner position to the radially outer position, and
the centrifugal clutch means includes, on a portion of at least one of the weight member and the pressing member that comes into contact with the other one of the weight member and the pressing member, a first region and a second region that causes the weight member to produce a greater thrust than the first region.

12. The power transmission apparatus according to claim 11, wherein
in course of an increase in rotational speed of the driving source, the weight member and the pressing member come into contact with each other on the first region and then come into contact with each other on the second region.

13. The power transmission apparatus according to claim 11 or 12, wherein
the first region is a first inclined surface that is a flat surface,
the second region is a second inclined surface that is a flat surface, and
the weight member and the pressing member are configured to be able to come into contact with each other on the first inclined surface and on the second inclined surface.
